# EUROPEAN PATENT APPLICATION

(11) **EP 4 535 862 A1**
(43) Date of publication of application: **09.04.2025**
(21) Application number: 22943242.2
(22) Date of filing: 27.05.2022
(51) Int. Cl.: H04W 36/00, H04W 76/15

(54) **MOBILITY MANAGEMENT CONFIGURATION METHOD, MOBILITY MANAGEMENT CONFIGURATION APPARATUS, AND COMMUNICATION DEVICE**

(71) Applicant: Beijing Xiaomi Mobile Software Co., Ltd., Beijing 100085 (CN)
(72) Inventor: XIONG, Yi, Beijing 100085 (CN); WU, Yumin, Beijing 100085 (CN)
(74) Representative: Dehns Germany Partnerschaft mbB
(86) International application number: PCT/CN2022/095766
(87) International publication number: WO 2023/226044

(57) **Abstract**

The present disclosure provides a mobility management configuration method, a mobility management configuration apparatus, and a communication device. The method may comprise: a terminal device receives first configuration information for conditional reconfiguration and second configuration information for cell group activation sent by a network device, wherein the first configuration information and the second configuration information have a shared portion of information; the terminal device performs conditional reconfiguration according to the first configuration information; and the terminal device reserves the second configuration information. Thus, cell group activation is not affected by the release of a configuration for conditional reconfiguration, thereby increasing system robustness.

## Description

### TECHNICAL FIELD

The present disclosure relates to the field of wireless communication technology, and in particular to a mobility management configuration method, a mobility management configuration apparatus and a communication device.

### BACKGROUND

Multi radio dual connectivity (MR-DC) is generalized dual connectivity, in which a terminal device can use radio resources provided by two different schedulers. These schedulers are located on two different access network nodes and connected through non-ideal backhaul. One provides 5G access and the other provides 4G or 5G access.

At present, in the establishment of the mobility enhancement project, cell group activation (or selective activation of cell groups) in MR-DC is proposed. The cell group activation and conditional reconfiguration may share the configuration of a target cell or target cell group. However, after performing the conditional reconfiguration, the terminal device needs to release the configuration information of the conditional reconfiguration, which will affect the cell group activation.

So, how to avoid the influence of the release of configuration information of conditional reconfiguration on the cell group activation is an urgent problem to be solved.

### SUMMARY

The present disclosure provides a mobility management configuration method, a mobility management configuration apparatus and a communication device, to avoid affecting the cell group activation due to the release of configuration information of the conditional reconfiguration, thereby improving the robustness of the system.

According to the first aspect of the present disclosure, a mobility management configuration method is provided, which can be applied to the terminal device side in a communication system. The method may include: receiving, by a terminal device, first configuration information for conditional reconfiguration and second configuration information for cell group activation sent by a network device, wherein the first configuration information and the second configuration information have common partial information; performing, by the terminal device, conditional reconfiguration according to the first configuration information; and retaining, by the terminal device, the second configuration information.

In some possible implementations, the partial information at least includes configuration information of a target cell or configuration information of a target cell group.

In some possible implementations, the first configuration information and the second configuration information are contained in identical mobility management configuration information.

In some possible implementations, the first configuration information is contained in first mobility management configuration information, the second configuration information is contained in second mobility management configuration information, the first mobility management configuration information and the second mobility management configuration information are different mobility management configuration information, the partial information is carried in the first mobility management configuration information or the second mobility management configuration information; the first configuration information or the second configuration information includes indication information, and the indication information is used for indicating the partial information.

In some possible implementations, the method further includes: releasing, by the terminal device, other information in the first configuration information except for the partial information.

According to the second aspect of the present disclosure, a mobility management configuration method is provided, which can be applied to the network device side in a communication system. The method may include: configuring, by a network device, first configuration information for conditional reconfiguration and second configuration information for cell group activation for a terminal device, wherein the first configuration information and the second configuration information have common partial information; and sending, by the network device, the first configuration information and the second configuration information to the terminal device.

In some possible implementations, sending, by the network device, the first configuration information and the second configuration information to the terminal device includes: sending, by the network device, mobility management configuration information to the terminal device; wherein the mobility management configuration information includes the first configuration information and the second configuration information.

In some possible implementations, sending, by the network device, the first configuration information and the second configuration information to the terminal device includes: sending, by the network device, first mobility management configuration information and second mobility management configuration information to the terminal device; wherein the first mobility management configuration information and the second mobility management configuration information are different mobility management configuration information, the first mobility management configuration information includes the first configuration information, the second mobility management configuration information includes the second configuration information, and the partial information is carried in the first mobility management configuration information or the second mobility management configuration information.

In some possible implementations, the first configuration information or the second configuration information includes indication information, and the indication information is used for indicating the partial information.

According to the third aspect of the present disclosure, a mobility management configuration method is provided, which can be applied to the network device side in the communication system. The method may include: configuring, by a network device, third configuration information for conditional reconfiguration and fourth configuration information for cell group activation for a terminal device; and sending, by the network device, the third configuration information and the fourth configuration information to the terminal device.

In some possible implementations, the third configuration information includes first partial information, the fourth configuration information includes second partial information, and the first partial information and the second partial information are identical.

In some possible implementations, the first partial information includes configuration information of a target cell or configuration information of a target cell group.

According to the fourth aspect of the present disclosure, a mobility management configuration method is provided, which can be applied to the terminal device side in the communication system. The method may include: receiving, by the terminal device, the third configuration information for conditional reconfiguration and the fourth configuration information for cell group activation sent by the network device; performing, by the terminal device, conditional reconfiguration according to the third configuration information; performing, by the terminal device, cell group activation according to the fourth configuration information.

In some possible implementations, the third configuration information includes first partial information, the fourth configuration information includes second partial information, and the first partial information and the second partial information are identical.

In some possible implementations, the first partial information includes configuration information of a target cell or configuration information of a target cell group.

According to the fifth aspect of the present disclosure, a mobility management configuration method is provided, which can be applied to the network device side in the communication system. The method may include: configuring, by a network device, fifth configuration information for a terminal device, wherein the fifth configuration information is used for conditional reconfiguration or cell group activation; and sending, by the network device, the fifth configuration information to the terminal device.

In some possible implementations, the method further includes: determining, by the network device, that the fifth configuration information has been configured for the terminal device; not configuring, by the network device, sixth configuration information for the terminal device, wherein the sixth configuration information is used for the cell group activation or the conditional reconfiguration.

In some possible implementations, the method further includes: determining, by the network device, that the terminal device has been configured with the fifth configuration information; instructing, by the network device, the terminal device to release the fifth configuration information; configuring, by the network device, sixth configuration information for the terminal device, wherein the sixth configuration information is used for the cell group activation or the conditional reconfiguration.

In some possible implementations, the fifth configuration information is used for the conditional reconfiguration and the sixth configuration information is used for the cell group activation; or, the fifth configuration information is used for the cell group activation and the sixth configuration information is used for the conditional reconfiguration.

According to the sixth aspect of the present disclosure, a mobility management configuration method is provided, which can be applied to the terminal device side in a communication system. The method may include: receiving, by the terminal device, the fifth configuration information sent by the network device, wherein the fifth configuration information is used for conditional reconfiguration or cell group activation; performing, by the terminal device, conditional reconfiguration or cell group activation according to the fifth configuration information.

In some possible implementations, the method further includes: releasing, by the terminal device, the fifth configuration information according to the instruction of the network device; receiving, by the terminal device, the sixth configuration information sent by the network device, wherein the sixth configuration information is used for cell group activation or conditional reconfiguration; performing, by the terminal device, cell group activation or conditional reconfiguration according to the sixth configuration information.

In some possible implementations, the fifth configuration information is used for conditional reconfiguration, and the sixth configuration information is used for cell group activation; or, the fifth configuration information is used for cell group activation, and the sixth configuration information is used for conditional reconfiguration.

According to the seventh aspect of the present disclosure, a mobility management configuration apparatus is provided, which can be a terminal device in a communication system or a chip or system on chip in a terminal device, and can also be a functional module in a terminal device for implementing the methods of the above-mentioned embodiments. The mobility management configuration apparatus can implement the functions performed by the terminal device in the above-mentioned embodiments, and these functions can be implemented by hardware executing corresponding software. These hardware or software includes one or more modules corresponding to the above-mentioned functions. The mobility management configuration apparatus includes: a receiving module, configured to receive first configuration information for conditional reconfiguration and second configuration information for cell group activation sent by a network device, wherein the first configuration information and the second configuration information have common partial information; and a processing module, configured to perform conditional reconfiguration according to the first configuration information; and retain the second configuration information.

In some possible implementations, the partial information at least includes configuration information of a target cell or configuration information of a target cell group.

In some possible implementations, the first configuration information and the second configuration information are contained in identical mobility management configuration information.

In some possible implementations, the first configuration information is contained in first mobility management configuration information, the second configuration information is contained in second mobility management configuration information, the first mobility management configuration information and the second mobility management configuration information are different mobility management configuration information, the partial information is carried in the first mobility management configuration information or the second mobility management configuration information; the first configuration information or the second configuration information includes indication information, and the indication information is used for indicating the partial information.

In some possible implementations, the processing module is further configured to release other information in the first configuration information except for the partial information.

According to the eighth aspect of the present disclosure, a mobility management configuration apparatus is provided, which can be a network device in a communication system or a chip or system on chip in the network device, and can also be a functional module in the network device for implementing the methods of the above-mentioned embodiments. The mobility management configuration apparatus can implement the functions performed by the network device in the above-mentioned embodiments, and these functions can be implemented by hardware executing corresponding software. These hardware or software includes one or more modules corresponding to the above-mentioned functions. The mobility management configuration apparatus includes: a processing module, configured to configure first configuration information for conditional reconfiguration and second configuration information for cell group activation for a terminal device, wherein the first configuration information and the second configuration information have common partial information; and a sending module, configured to send the first configuration information and the second configuration information to the terminal device.

In some possible implementations, the sending module is configured to send mobility management configuration information to the terminal device; wherein the mobility management configuration information includes the first configuration information and the second configuration information.

In some possible implementations, the sending module is configured to send first mobility management configuration information and second mobility management configuration information to the terminal device; wherein the first mobility management configuration information and the second mobility management configuration information are different mobility management configuration information, the first mobility management configuration information includes the first configuration information, the second mobility management configuration information includes the second configuration information, and the partial information is carried in the first mobility management configuration information or the second mobility management configuration information.

In some possible implementations, the first configuration information or the second configuration information includes indication information, and the indication information is used for indicating the partial information.

According to the ninth aspect of the present disclosure, a mobility management configuration apparatus is provided. The mobility management configuration apparatus may be a network device in a communication system or a chip or a system on chip in the network device, or a functional module in the network device for implementing the methods of the above-mentioned embodiments. The mobility management configuration apparatus may implement the functions performed by the network device in the above-mentioned embodiments, and these functions may be implemented by hardware executing corresponding software. These hardware or software includes one or more modules corresponding to the above-mentioned functions. The mobility management configuration apparatus includes: a processing module, configured to configure third configuration information for conditional reconfiguration and fourth configuration information for cell group activation for a terminal device; and a sending module, configured to send the third configuration information and the fourth configuration information to the terminal device.

In some possible implementations, the third configuration information includes first partial information, the fourth configuration information includes second partial information, and the first partial information and the second partial information are identical.

In some possible implementations, the first partial information includes configuration information of a target cell or configuration information of a target cell group.

According to the tenth aspect of the present disclosure, a mobility management configuration apparatus is provided. The mobility management configuration apparatus may be a terminal device in a communication system or a chip or a system on chip in the terminal device, or a functional module in the terminal device for implementing the methods of the above-mentioned embodiments. The mobility management configuration apparatus can implement the functions performed by the terminal device in the above embodiments, and these functions can be implemented by hardware executing corresponding software. These hardware or software includes one or more modules corresponding to the above functions. The mobility management configuration apparatus includes: a receiving module, configured to receive the third configuration information for conditional reconfiguration and the fourth configuration information for cell group activation sent by the network device; a processing module, configured to perform conditional reconfiguration according to the third configuration information; the terminal device performs cell group activation according to the fourth configuration information.

In some possible implementations, the third configuration information includes first partial information, the fourth configuration information includes second partial information, and the first partial information and the second partial information are identical.

In some possible implementations, the first partial information includes configuration information of a target cell or configuration information of a target cell group.

According to the eleventh aspect of the present disclosure, a mobility management configuration apparatus is provided, which can be a network device in a communication system or a chip or system on chip in the network device, and can also be a functional module in the network device for implementing the methods of the above embodiments. The mobility management configuration apparatus can implement the functions performed by the network device in the above embodiments, and these functions can be implemented by hardware executing corresponding software. These hardware or software includes one or more modules corresponding to the above functions. The mobility management configuration apparatus includes: a processing module, configured to configure fifth configuration information for a terminal device, wherein the fifth configuration information is used for conditional reconfiguration or cell group activation; and a sending module, configured to send the fifth configuration information to the terminal device.

In some possible implementations, the processing module is further configured to: determine that the fifth configuration information has been configured for the terminal device; and not configure sixth configuration information for the terminal device, wherein the sixth configuration information is used for the cell group activation or the conditional reconfiguration.

In some possible implementations, the processing module is further configured to: determine that the terminal device has been configured with the fifth configuration information; instruct the terminal device to release the fifth configuration information; configure sixth configuration information for the terminal device, wherein the sixth configuration information is used for the cell group activation or the conditional reconfiguration.

In some possible implementations, the fifth configuration information is used for the conditional reconfiguration and the sixth configuration information is used for the cell group activation; or, the fifth configuration information is used for the cell group activation and the sixth configuration information is used for the conditional reconfiguration.

According to the twelfth aspect of the present disclosure, a mobility management configuration apparatus is provided. The mobility management configuration apparatus can be a terminal device in a communication system or a chip or system on chip in the terminal device, and can also be a functional module in the terminal device for implementing the methods of the above-mentioned embodiments. The mobility management configuration apparatus can implement the functions performed by the terminal device in the above-mentioned embodiments, and these functions can be implemented by hardware executing corresponding software. These hardware or software includes one or more modules corresponding to the above-mentioned functions. The mobility management configuration apparatus includes: a receiving module, configured to receive the fifth configuration information sent by the network device, wherein the fifth configuration information is used for conditional reconfiguration or cell group activation; and a processing module, configured to perform conditional reconfiguration or cell group activation by the terminal device according to the fifth configuration information.

In some possible implementations, the processing module is further configured to release the fifth configuration information according to the instruction of the network device; the receiving module is further configured to receive the sixth configuration information sent by the network device, wherein the sixth configuration information is used for cell group activation or conditional reconfiguration; the processing module is further configured to perform cell group activation or conditional reconfiguration according to the sixth configuration information.

In some possible implementations, the fifth configuration information is used for conditional reconfiguration, and the sixth configuration information is used for cell group activation; or, the fifth configuration information is used for cell group activation, and the sixth configuration information is used for conditional reconfiguration.

According to the thirteenth aspect of the present disclosure, a communication device is provided, such as a terminal device, including: an antenna; a memory; and a processor, connected to the antenna and the memory respectively, configured to control transmission and reception of the antenna by executing computer executable instructions stored on the memory, and capable of implementing the method described in any one of the first, fourth and sixth aspects of the present disclosure and possible implementations thereof.

According to the fourteenth aspect of the present disclosure, a communication device is provided, such as a network device, including: an antenna; a memory; and a processor, connected to the antenna and the memory respectively, configured to control transmission and reception of the antenna by executing computer executable instructions stored on the memory, and capable of implementing the method described in any one of the second, third and fifth aspects of the present disclosure and possible implementations thereof.

According to the fourteenth aspect of the present disclosure, a computer storage medium is provided, the computer storage medium stores computer executable instructions, wherein the computer executable instructions can implement the method described in any one of the first to sixth aspects of the present disclosure and possible implementations thereof after executed by the processor.

According to the fifteenth aspect of the present disclosure, a computer program or a computer program product is provided. When the computer program product is executed on a computer, the computer implements the method described in any one of the first to sixth aspects of the present disclosure and possible implementations thereof.

In the present disclosure, in the case where conditional reconfiguration and cell group activation share the same cell configuration, the terminal device retains the configuration information for cell group activation after executing conditional reconfiguration, and the information includes partial information commonly used for conditional reconfiguration. In this way, the influence of the release of configuration information of conditional reconfiguration on the cell group activation is avoided, and the system robustness is improved.

It should be understood that the technical solutions of the seventh to fifteenth aspects of the present disclosure are consistent with those of the first to sixth aspects of the present disclosure, and the beneficial effects achieved by each aspect and the corresponding feasible implementations are similar, and will not be repeated.

### BRIEF DESCRIPTION OF THE DRAWINGS

FIG. 1 is a schematic diagram of the first DC scenario in an embodiment of the present disclosure;
FIG. 2 is a schematic diagram of the second DC scenario in an embodiment of the present disclosure;
FIG. 3 is a schematic diagram of a communication system in an embodiment of the present disclosure;
FIG. 4 is a structural schematic diagram of a communication system in an embodiment of the present disclosure;
FIG. 5 is a schematic diagram of the specific implementation process of the first mobility management configuration method in an embodiment of the present disclosure;
FIG. 6 is a schematic diagram of the specific implementation process of the second mobility management configuration method in an embodiment of the present disclosure;
FIG. 7A is a schematic diagram of the specific implementation process of the third mobility management configuration method in an embodiment of the present disclosure;
FIG. 7B is a schematic diagram of the specific implementation process of the fourth mobility management configuration method in an embodiment of the present disclosure;
FIG. 7C is a schematic diagram of the specific implementation process of the fifth mobility management configuration method in an embodiment of the present disclosure;
FIG. 8 is a schematic diagram of the specific implementation process of the first mobility management method on the UE side in an embodiment of the present disclosure;
FIG. 9 is a schematic diagram of the specific implementation process of the first mobility management method on the network device side in an embodiment of the present disclosure;
FIG. 10 is a schematic diagram of the specific implementation process of the second mobility management method on the network device side in an embodiment of the present disclosure;
FIG. 11 is a schematic diagram of the specific implementation process of the second mobility management method on the UE side in an embodiment of the present disclosure;
FIG. 12A is a schematic diagram of the specific implementation process of the third mobility management method on the network device side in an embodiment of the present disclosure;
FIG. 12B is a schematic diagram of the specific implementation process of the fourth mobility management method on the network device side in an embodiment of the present disclosure;
FIG. 12C is a schematic diagram of the implementation process of the fifth mobility management configuration method on the network device side in an embodiment of the present disclosure;
FIG. 13A is a schematic diagram of the specific implementation process of the third mobility management method on the UE side in an embodiment of the present disclosure;
FIG. 13B is a schematic diagram of the implementation process of the fourth mobility management configuration method on the UE side in an embodiment of the present disclosure;
FIG. 14 is a schematic diagram of the structure of a mobility management configuration apparatus in an embodiment of the present disclosure;
FIG. 15 is a schematic diagram of the structure of a communication device in an embodiment of the present disclosure;
FIG. 16 is a schematic diagram of the structure of a terminal device in an embodiment of the present disclosure; and
FIG. 17 is a schematic diagram of the structure of a network device in the embodiment of the present disclosure.

### DETAILED DESCRIPTION

The following will be combined with the drawings in the embodiments of the present disclosure to clearly and completely describe the technical solutions in the embodiments of the present disclosure. The described embodiments are part of the embodiments of the present disclosure, not all of the embodiments. Based on the embodiments in the present disclosure, all other embodiments obtained by ordinary technicians in the field without creative work are within the scope of protection of the present disclosure.

The embodiments of the present disclosure will explain the example embodiments in detail, and its examples are shown in the drawings. When the following description refers to the drawings, unless otherwise indicated, the same numbers in different drawings represent the same or similar elements. The implementations described in the following example embodiments do not represent all implementations consistent with the embodiments of the present disclosure.

The terms used in the embodiments of the present disclosure are only for the purpose of describing specific embodiments, and are not intended to limit the embodiments of the present disclosure. The singular forms of "one" and "the" used in the embodiments of the present disclosure and the appended claims are also intended to include plural forms, unless the context clearly indicates other meanings. It should also be understood that the term "and/or" used herein refers to and includes any or all possible combinations of one or more related listed items.

It should be understood that although the terms "first", "second", "third", etc. may be used in the embodiments of the present disclosure to describe various information, these information should not be limited to these terms. These terms are only used to distinguish the same type of information from each other. For example, without departing from the scope of the embodiments of the present disclosure, "first information" may also be referred to as "second information", and similarly, "second information" may also be referred to as "first information". Depending on the context, the word "if" as used herein may be interpreted as "at......" or "when......" or "in response to determining".

The technical solution provided by the embodiments of the present disclosure may be applied to wireless communication between communication devices. The wireless communication between communication devices may include: wireless communication between the network device and the terminal device, wireless communication between the network device and the network device, and wireless communication between the terminal device and the terminal device. In the embodiments of the present disclosure, the term "wireless communication" may also be referred to as "communication", and the term "communication" may also be described as "data transmission", "information transmission" or "transmission".

Below, the concepts mentioned in the embodiments of the present disclosure are explained.

### 1. Dual connection:

MR-DC is intra-E-UTRA dual connection (also known as dual link) in the generalized evolved UMTS (universal mobile telecommunications system) terrestrial radio access (evolved UTMS radio access, E-UTRA), in which the terminal device can use the radio resources provided by two different schedulers, which are located on two different access network nodes, connected through non-ideal backhaul, one providing 5G wireless access network (i.e., NG-RAN) access, and the other providing 4G wireless access network (i.e., E-UTRAN) or NG-RAN access. One is served as the master node (MN) and the other is served as the secondary node (SN). MN and SN are connected through a network interface, where at least MN is connected to the core network. Here, the master node can also be called the master base station, and the secondary node can also be called the secondary base station.

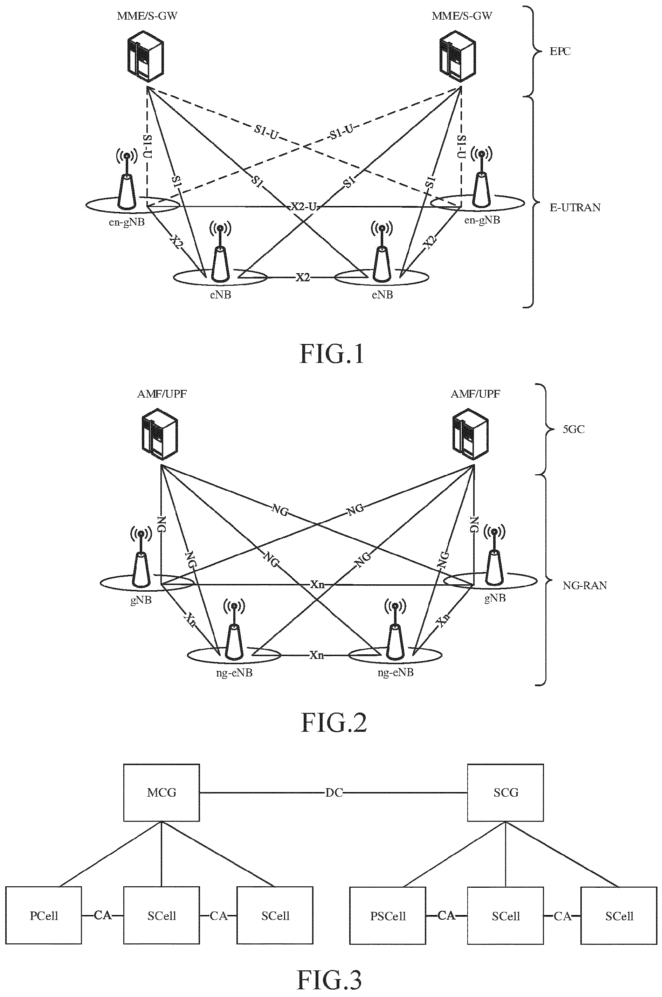

In the new radio (NR) system, due to different requirements of operators and in order to maximize the reuse of the existing long term evolution (LTE) network, the NR system defines two dual-connection scenarios: one is dual-connection under the 4G core network (such as the evolved packet core (EPC)), also known as MR-DC with EPC; the other is dual-connection under the 5G core network (such as 5GC), also known as MR-DC with 5GC.
(1) MR-DC with EPC, namely E-UTRA-NR DC (i.e., EN-DC). FIG. 1 is a schematic diagram of the first DC scenario in the embodiment of the present disclosure. Referring to FIG. 1, E-UTRAN supports MR-DC through EN-DC, wherein the terminal device is connected to a base station (e.g., a 4G base station, i.e., eNB) serving as an MN and a base station (e.g., a 5G base station connected to the 4G core network, i.e., en-gNB) serving as an SN. The eNB is connected to the EPC through the S1 interface and connected to the en-gNB through the X2 interface. The en-gNB can also be connected to the EPC through the S1-U interface or connected to other en-gNBs through the X2-U interface.
(2) MR-DC with 5GC, which can include: NGEN-DC, NE-DC, and NR-DC.

NGEN-DC (i.e., E-UTRA-NR Dual Connectivity): NG-RAN supports NG-RAN E-UTRA-NR dual connectivity, where the terminal device is connected to one base station (such as a 4G base station connected to the 5G core network, i.e., ng-eNB) serving as an MN, and another base station (such as a 5G base station, i.e., gNB) serving as an SN. The ng-eNB is connected to the 5GC, and the gNB is connected to the ng-eNB via the Xn interface.

NE-DC (i.e., NR-E-UTRA Dual Connectivity): NG-RAN supports NR-E-UTRA DC, where the terminal device is connected to the gNB serving as the MN and the ng-eNB serving as the SN. The gNB is connected to the 5GC, and the ng-eNB is connected to the gNB via the Xn interface.

NR-DC (i.e., NR-NR Dual Connectivity): FIG. 2 is a schematic diagram of the second DC scenario in the embodiment of the present disclosure. Referring to FIG. 2, NG-RAN supports NR-NR DC, in which the terminal device is connected to the gNB serving as the MN and another gNB serving as the SN. The master gNB is connected to the 5GC through the NG interface, the two gNBs are connected through the Xn interface, and the gNB serving as the SN can also be connected to the 5GC through the NG-U interface. In addition, NR-DC can also be used for the terminal device to access a single gNB, serving as both MN and SN, and configuring a master cell group (MCG) and a secondary cell group (SCG) at the same time. The cell group includes one or more of the master cell group and the secondary cell group. The cell includes one or more of the primary cell (PCell), the primary secondary cell (PSCell), and the secondary cell (SCell).

In the above NR-DC scenario, the terminal device can access the MCG and the SCG. FIG. 3 is a schematic diagram of a communication system in an embodiment of the present disclosure. Referring to FIG. 3, in the MCG, there may be many cells, one of which is used to initiate initial access. This cell is called the primary cell (PCell), that is, the most "primary" cell in the MCG. The PCell under the MCG and the secondary cell (SCell) under the MCG are combined through carrier aggregation (CA). In SCG, the primary secondary cell is PSCell, and the secondary cell is SCell. Since many signaling can only be sent on PCell and PSCell, for convenience of description, the protocol also defines a concept of sPCell (special Cell). PCell and PSCell are collectively referred to as sPCell.

### 2. Conditional-triggered mobility management:

In the 5G system, conditional-triggered mobility management is introduced. The terminal device implements the conditional-triggered mobility management based on the network configuration conditions and the associated candidate cells. The terminal device triggers mobility management after the conditions are met and accesses its associated candidate cells. The network configuration conditions can be specific events based on measurement results, or events based on location and time, or a combination of these events. The associated candidate cells can be candidate primary cells or primary secondary cells. The primary cells or primary secondary cells correspond to the corresponding conditional-triggered mobility management respectively, namely conditional hand over (CHO), conditional PSCell change (CPC), and conditional PSCell addition (CPA). CPC or CPA can also be called conditional PSCell addition or change (CPAC). Currently, the simultaneous configuration of CHO and CPAC (i.e., CPC or CPA) is supported. The configuration information of CHO or CPAC can include a configuration identifier (i.e., configuration ID), a trigger condition (also called an execution condition), and the configuration information of the target cell or the configuration information of the target cell group.

In CHO or CPAC, the terminal device configured with CHO or CPAC needs to release the configuration information of CHO or the configuration information of CPAC after accessing the target PCell or PSCell. Therefore, if the network device does not reconfigure or reinitialize CHO or CPAC, the terminal device will not have the opportunity to continue to execute CHO or CPAC. This will increase the delay of CHO or CPAC, and increase the signal overhead. Here, the conditional reconfiguration includes but is not limited to configuring or reconfiguring CHO and/or CPCA. Alternatively, the conditional reconfiguration can be used to configure the conditional-triggered mobility management.

### 3. Cell group activation:

In the establishment of the mobility enhancement project, cell group activation (or selective activation of cell groups) in MR-DC was proposed. It can enable the corresponding configuration information still to be executed after the cell group or cell is changed, without requiring the network to reconfigure or reinitialize the corresponding configuration information of the cell group activation. This can reduce the signaling overhead and the interruption duration of the cell group change. The configuration information of the cell group activation may include: a configuration ID and the configuration of the target cell or the configuration of the target cell group. Optionally, the configuration information of the cell group activation may also include a trigger condition (also referred to as an execution condition or an activation condition).

In the cell group activation, the network device may provide the terminal device with the configuration of the target cell or the configuration of the target cell group. The target cell or the target cell group may be activated or deactivated subsequently, without re-providing the configuration information of the cell or the configuration information of the cell group. That is, in the cell group activation, after activating a new cell or cell group, or applying a new cell configuration or cell group configuration, or accessing a new cell or cell group, the terminal device will not delete the corresponding configuration information of the cell group activation.

In one embodiment, the cell group activation is a mobility management process, including any mobility management process in which the UE activates or deactivates the corresponding cell or cell group according to the signaling sent by the network, the criteria specified in the protocol, or the UE autonomously by configuring the cell group activation configuration, or applying the corresponding cell configuration or cell group configuration, or accessing the cell or cell group.

In one embodiment, the cell group activation is a mobility management process, including any mobility management process in which, after executing the mobility process, the corresponding part or all of the configuration information is retained, or not deleted, or not released.

Furthermore, in order to improve robustness and reduce the impact on the throughput of the terminal device, the above-mentioned conditional reconfiguration and cell group activation can be configured at the same time, and the conditional reconfiguration and cell group activation may correspond to the same target cell configuration information or target cell group configuration information, that is, the target cell or target cell group of the conditional reconfiguration is also the target cell or target cell group of the cell group activation. For example, the cell to be activated (i.e., the target cell) or cell group (i.e., the target cell group) activated by MCG is the same cell or cell group (such as PCell or MCG) as the target cell or target cell group of CHO, corresponding to the same cell configuration information or cell group configuration information. Alternatively, the cell to be activated (i.e., the target cell) or cell group (i.e., the target cell group) activated by SCG is the same cell or cell group (such as PSCell or SCG) as the target cell or target cell group of CPAC, corresponding to the same cell configuration information or cell group configuration information.

In the above case, the network device may configure conditional reconfiguration and cell group activation for the terminal device at the same time, and it is possible that they correspond to the same target cell or target cell group. Then, in order to save signaling overhead, when the network device is configured, conditional reconfiguration and cell group activation can share the same target cell configuration information or target cell group configuration information. At this time, after the terminal device performs conditional reconfiguration (i.e., CHO, CPA or CPC), the configuration information of the conditional reconfiguration (including the configuration information of the target cell or the configuration information of the target cell group) is deleted, which will affect the corresponding cell group activation.

Therefore, how to avoid the influence of the release of configuration information of conditional reconfiguration on the cell group activation is an urgent problem to be solved.

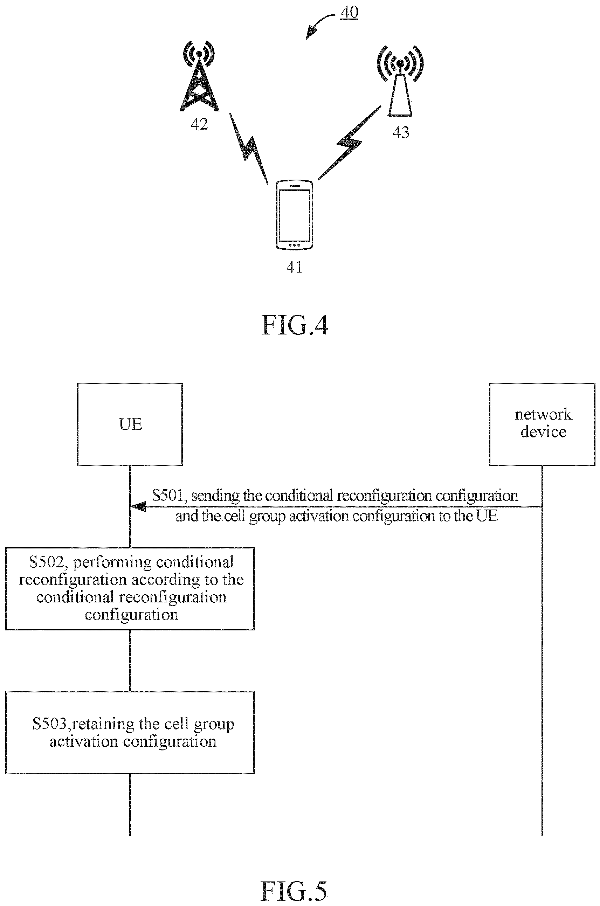

In order to solve the above technical problems, the embodiment of the present disclosure provides a communication system, which can be a communication system using cellular mobile communication technology. FIG. 4 is a structural schematic diagram of another communication system in the embodiment of the present disclosure. As shown in FIG. 4, the communication system 40 may include: a terminal device 41, and an MN 42. Optionally, the communication system 40 can also support dual connection, so the communication system can include an SN 43.

In one embodiment, the terminal device 41 may be a device that provides voice or data connectivity to a user. In some embodiments, the terminal device may also be referred to as the user equipment (UE), mobile station, subscriber unit, station or terminal equipment (TE), etc. The terminal device may be a cellular phone, a personal digital assistant (PDA), a wireless modem, a handheld device, a laptop computer, a cordless phone, a wireless local loop (WLL) station or a pad, etc. With the development of wireless communication technology, devices that can access a communication system, communicate with the network side of a communication system, or communicate with other devices through a communication system are all terminal devices in the embodiments of the present disclosure, for example, terminals and cars in intelligent transportation, household appliances in smart homes, power meter reading instruments in smart grids, voltage monitoring instruments, environmental monitoring instruments, video monitoring instruments in intelligent complete networks, cash registers, etc. In the embodiments of the present disclosure, the terminal device may communicate with a network device, and a plurality of terminal devices may also communicate with each other. The terminal device can be statically fixed or mobile. In the embodiment of the present disclosure, the terminal device 41 being UE is taken as an example for explanation.

The above-mentioned MN 42 and SN 43 can be devices on the access network side for supporting terminal access to the communication system. For example, it can be an evolved NodeB (eNB) in a 4G access technology communication system, a next-generation base station (such as gNB, en-gNB, ng-eNB, etc.) in a 5G access technology communication system, a transmission reception point (TRP), a relay node, an access point (AP), etc.

In combination with the above-mentioned communication system, the embodiment of the present disclosure provides a mobility management configuration method, which can be applied to the above-mentioned communication system. In order to avoid affecting the cell group activation due to the release of configuration information of the conditional reconfiguration, the above-mentioned mobility management configuration method can be and is not limited to the following situations.

It should be noted that, the present disclosure includes the following embodiments and any combination of different implementations in the embodiments. Each embodiment and implementation in the present disclosure can be executed separately or in combination, and the embodiment of the present disclosure does not specifically limit this.

Situation 1: the network device (such as MN or SN) configures conditional reconfiguration and cell group activation for the UE, and the conditional reconfiguration and cell group activation are jointly configured, and there is common configuration information between the conditional reconfiguration and the cell group activation. In the embodiment of the present disclosure, the conditional reconfiguration configuration and the cell group activation configuration may include the common configuration (i.e., common partial information, which may be recorded as configuration X). Here, "common configuration" may be understood as configuration information commonly used for conditional reconfiguration and cell group activation, such as the common target cell configuration or the common target cell group configuration.

In one implementation, "common configuration" may also include one or more of the common configuration identifier, the trigger condition.

FIG. 5 is a schematic diagram of the specific implementation process of the first mobility management configuration method in the embodiment of the present disclosure. Referring to FIG. 5, the method may include following steps.

S501, the network device sends the conditional reconfiguration configuration (i.e., the first configuration information) and the cell group activation configuration (i.e., the second configuration information) to the UE.

Here, the conditional reconfiguration configuration may be understood as configuration information of conditional reconfiguration or configuration information used for conditional reconfiguration. The cell group activation configuration may be understood as configuration information of cell group activation or configuration information used for cell group activation.

It can be understood that, the network device configures conditional reconfiguration and cell group activation for the UE at the same time, then the UE can receive the conditional reconfiguration configuration and cell group activation configuration sent by the network device.

Optionally, the network device can configure one or more conditional reconfiguration configurations for the UE. The network device can also configure one or more cell group activation configurations for the UE.

In some possible implementations, the conditional reconfiguration configuration may include configuration information dedicated to conditional reconfiguration (also referred to as conditional reconfiguration dedicated configuration, recorded as configuration A), and the cell group activation configuration may include configuration information dedicated to cell group activation (also referred to as the cell group activation dedicated configuration, recorded as configuration B). Further, the above configuration X can form conditional reconfiguration configuration with configuration A, and the above configuration X can form the cell group activation configuration with configuration B.

In one embodiment, configuration A and configuration B can be contained in the same mobility management configuration, in which case the mobility management configuration can include: configuration A, configuration B, and configuration X.

In another embodiment, configuration A and configuration B may be contained in different mobility management configurations, such as mobility management configuration 1 (i.e., the first mobility management configuration) and mobility management configuration 2 (i.e., the second mobility management configuration). In this case, mobility management configuration 1 may include: configuration A and configuration X, and mobility management configuration 2 may include: configuration B and indication information for indicating configuration X. Alternatively, configuration A and configuration B may be contained in different mobility management configurations, such as mobility management configuration 1 and mobility management configuration 2. In this case, mobility management configuration 1 may include: configuration A and indication information for indicating configuration X, and mobility management configuration 2 may include: configuration B and configuration X. Alternatively, configuration A and configuration B may be contained in different mobility management configurations, such as mobility management configuration 1 and mobility management configuration 2. In this case, mobility management configuration 1 may include: configuration A and indication information for indicating configuration X, and mobility management configuration 2 may include: configuration B and indication information for indicating configuration X.

In practical applications, the indication information for indicating configuration X may include one or more of the following: configuration ID of configuration A or configuration B carrying configuration X, common target cell ID, common target cell group ID, etc.

In one embodiment, the indication information for indicating configuration X may also be implicit indication information. For example, configuration X is indicated by configuration ID, that is, configuration X is carried in the configuration corresponding to a specific configuration ID. The configuration X may also be indicated in other ways, and the embodiment of the present disclosure does not specifically limit this.

For example, the configuration A may include at least one of conditional reconfiguration dedicated configurations, such as configuration ID (such as condReconfigId) and trigger conditions (such as condExecutionCond). The configuration B may include at least one of cell group activation dedicated configurations, such as configuration ID and trigger conditions (optional). The configuration X may include: a common target cell configuration or a common target cell group configuration. The configuration X may also include other configuration information commonly used for conditional reconfiguration and cell group activation, and the embodiment of the present disclosure does not specifically limit this. The configuration A may also include other configuration information dedicated to conditional reconfiguration, and the embodiment of the present disclosure does not specifically limit this. The configuration B may also include other configuration information dedicated to cell group activation, and the embodiment of the present disclosure does not specifically limit this.

S502, the UE performs conditional reconfiguration according to the conditional reconfiguration configuration.

It should be understood that, after receiving the conditional reconfiguration configuration, the UE starts to evaluate the trigger condition. When the UE evaluates that one or more conditions satisfy the trigger condition, the UE can directly trigger the corresponding execution process of the conditional reconfiguration. In the process of the UE executing the conditional reconfiguration, the corresponding conditional reconfiguration configuration is applied.

For example, it is assumed that the conditional reconfiguration is CHO. Then, the conditional reconfiguration configuration is carried with the configuration ID, the handover execution condition (i.e., the trigger condition), and the target cell configuration or target cell group configuration corresponding to each handover execution condition. After receiving the conditional reconfiguration configuration, the UE starts to evaluate the handover execution condition. When the UE evaluates that one or more handover execution conditions are satisfied, the UE can directly trigger the handover process and initiate random access to the target cell or target cell group according to the target cell configuration or target cell group configuration corresponding to the handover execution condition.

Alternatively, it is assumed that the conditional reconfiguration is CPAC. Then. The conditional reconfiguration configuration is carried with the configuration ID, the execution condition (i.e., the trigger condition), and the target cell configuration or target cell group configuration corresponding to each execution condition. After receiving the conditional reconfiguration configuration, the UE starts to evaluate the execution condition. When the UE evaluates that one or more execution conditions are satisfied, the UE can initiate an access process and access the target cell or target cell group corresponding to the execution condition, and will no longer evaluate the target cell configuration or target cell group configuration corresponding to other execution conditions.

S503, the UE retains the cell group activation configuration.

It should be understood that since the network device has configured both conditional reconfiguration and cell group activation for the UE, then, in order to avoid affecting the cell group activation, the UE retains the cell group activation configuration after executing conditional reconfiguration through S502, for subsequent cell group activation. Here, the retained cell group activation configuration may include the above-mentioned common configuration, such as the common target cell configuration or the common target cell group configuration.

In one embodiment, since the conditional reconfiguration configuration and the cell group activation configuration include the common configuration, then, after S502, the UE retains the cell group activation configuration, which can be understood as retaining the cell group activation dedicated configuration and the common configuration. Then, the UE can release other information in the conditional reconfiguration configuration except for the above-mentioned common configuration, that is, the conditional reconfiguration dedicated configuration.

In another embodiment, after executing S501 and before executing S502, the UE can also duplicate the common configuration, so that there are two sets of common configurations for the conditional reconfiguration configuration and the cell group activation configuration. Then, the conditional reconfiguration dedicated configuration and one set of common configuration can constitute a complete conditional reconfiguration configuration, and the cell group activation dedicated configuration and another set of common configuration can constitute a complete cell group activation configuration. It can also be understood that the UE can add the duplicated common configuration to the cell group activation configuration. In this way, after executing S502, the UE can release the complete conditional reconfiguration configuration, to avoid affecting the cell group activation.

So far, the UE completes the execution of the conditional reconfiguration.

In the embodiment of the present disclosure, when the conditional reconfiguration and the cell group activation share the same cell configuration, the UE retains the configuration information for the cell group activation after executing the conditional reconfiguration, and the information includes partial information commonly used for the conditional reconfiguration. In this way, configuration of the conditional reconfiguration is achieved, thereby avoiding the influence of deleting the configuration of the conditional reconfiguration on the cell group activation, and improving the system robustness.

Situation 2: the network device (such as MN or SN) configures conditional reconfiguration and cell group activation for the UE according to the protocol. The conditional reconfiguration configuration is independent of the cell group activation configuration, but the conditional reconfiguration and the cell group activation do not share the same set of common configuration.

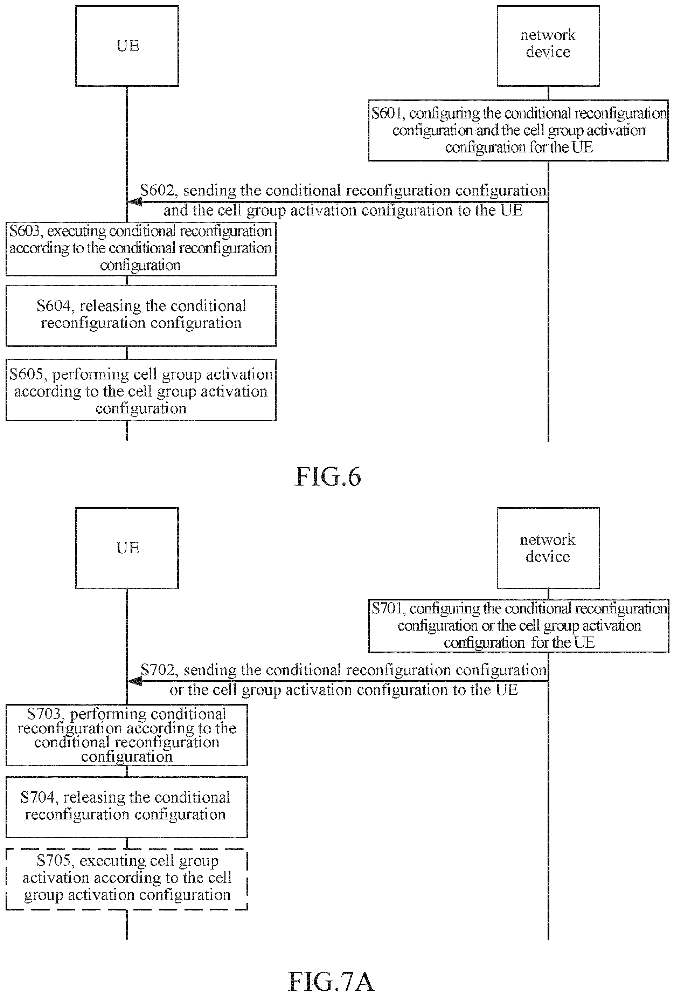

FIG. 6 is a schematic diagram of the implementation process of the second mobility management configuration method in the embodiment of the present disclosure. Referring to FIG. 6, the above method also includes following steps.

S601, the network device configures the conditional reconfiguration configuration (i.e., the third configuration information) and the cell group activation configuration (i.e., the fourth configuration information) for the UE.

Here, the conditional reconfiguration configuration and the cell group activation configuration may be partially the same or completely different. When the conditional reconfiguration configuration is partially the same as the cell group activation configuration, the conditional reconfiguration configuration may include the first partial information, the cell group activation may include the second partial information, the first partial information is the same as the second partial information, and the first partial information and the second partial information may be the above-mentioned common configuration.

It should be understood that, when the network device configures conditional reconfiguration and cell group activation for the UE according to the protocol, it configures the conditional reconfiguration configuration and the cell group activation configuration respectively, the conditional reconfiguration configuration may include the above-mentioned common configuration, and the cell group activation configuration may also include the above-mentioned common configuration.

In another embodiment, the first partial information and the second partial information may also be different. In this case, releasing the conditional reconfiguration configuration will not affect the cell group activation.

S602, the network device sends the conditional reconfiguration configuration and the cell group activation configuration to the UE.

It should be understood that, after the network device configures the conditional reconfiguration configuration and the cell group activation configuration for the UE through S601, the conditional reconfiguration configuration and the cell group activation configuration are sent to the UE, to complete the configuration of the conditional reconfiguration and cell group activation of the UE.

Next, after S602, according to the mobility management requirements, the UE can execute S603 to S604, or execute S605.

S603, the UE executes conditional reconfiguration according to the conditional reconfiguration configuration.

S604, the UE releases the conditional reconfiguration configuration.

It can be understood that, in the above S603 to S604, after the UE receives the conditional reconfiguration configuration configured by the network device through S602, it executes conditional reconfiguration according to the conditional reconfiguration configuration, to access the target cell or target cell group corresponding to the trigger condition. Then, after completing the conditional reconfiguration, the UE releases the conditional reconfiguration configuration and retains the cell group activation configuration.

S605, the UE performs cell group activation according to the cell group activation configuration.

It can be understood that, after receiving the cell group activation configuration configured by the network device through S602, the UE performs cell group activation according to the cell group activation configuration, to access the target cell or target cell group corresponding to the execution condition.

So far, the network device completes the configuration of conditional reconfiguration and cell group activation, and the UE completes the execution of conditional reconfiguration and cell group activation according to the configuration of the network device.

In the embodiment of the present disclosure, since the conditional reconfiguration and the cell group activation do not share the same set of common configuration, the release of the conditional reconfiguration configuration by the UE will not affect the cell group activation, thereby improving the robustness of the system.

Situation 3: the network device (such as MN or SN) configures the conditional reconfiguration or cell group activation for the UE according to the protocol, that is, the network device can configure one of the conditional reconfiguration and cell group activation for the UE.

Optionally, the conditional reconfiguration configuration and the cell group activation configuration may include part of the same configuration information, or may include completely different configuration information.

FIG. 7A is a schematic diagram of the implementation process of the third mobility management configuration method in the embodiment of the present disclosure. Referring to the solid line in FIG. 7A, the above method further includes following steps.

S701, the network device configures the conditional reconfiguration configuration or the cell group activation configuration (i.e., the fifth configuration information) for the UE.

S702, the network device sends the conditional reconfiguration configuration or the cell group activation configuration to the UE.

It should be understood that the network device configures the conditional reconfiguration or the cell group activation for the UE through S701, and correspondingly, the network device sends the conditional reconfiguration configuration or the cell group activation configuration to the UE. For example, if the network device configures the conditional reconfiguration for the UE through S701, the network device sends the conditional reconfiguration configuration to the UE through S702; or, if the network device configures the cell group activation for the UE through S701, the network device sends the cell group activation configuration to the UE through S702.

In one embodiment, still referring to the solid line in FIG. 7A, if in S701, the network device configures the conditional reconfiguration for the UE, the UE executes S703 to S704 after S702.

S703, UE performs conditional reconfiguration according to the conditional reconfiguration configuration.

S704, UE releases the conditional reconfiguration configuration.

It can be understood that, in the above S703 to S704, after the UE receives the conditional reconfiguration configuration configured by the network device through S702, it performs conditional reconfiguration according to the conditional reconfiguration configuration, to access the target cell or target cell group corresponding to the trigger condition. Then, after completing the conditional reconfiguration, the UE releases the conditional reconfiguration configuration and retains the cell group activation configuration.

In another embodiment, referring to the dotted line in FIG. 7A, if in S701, the network device configures the cell group activation reconfiguration for the UE, then the UE executes S705 after S702.

S705, the UE executes cell group activation according to the cell group activation configuration.

It can be understood that, after the UE receives the cell group activation configuration configured by the network device through S702, it executes cell group activation according to the cell group activation configuration, to randomly access the target cell or target cell group corresponding to the execution condition.

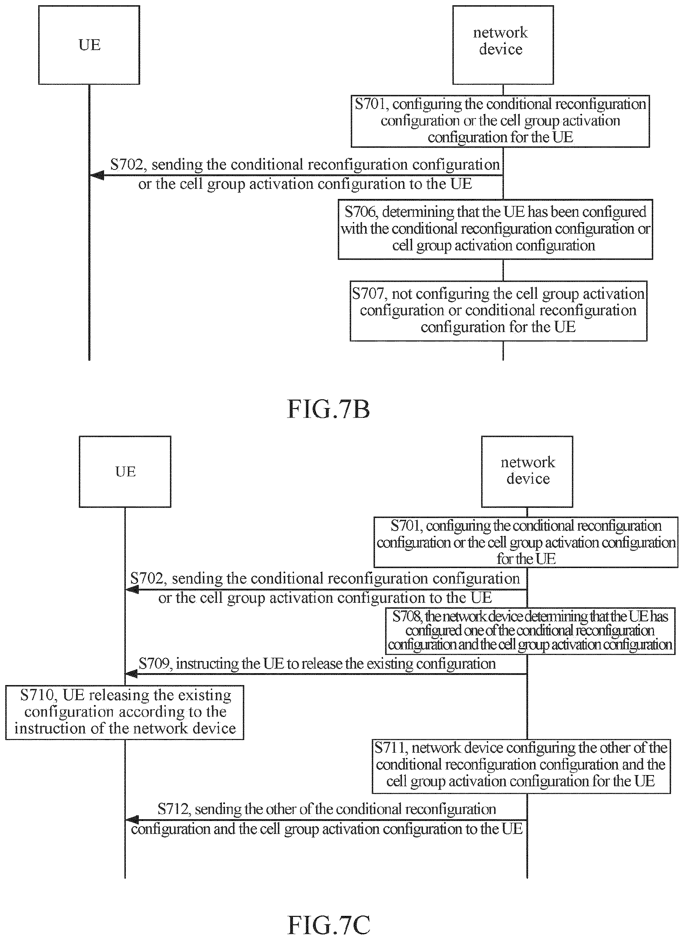

In some possible implementations, the network device can select one of the conditional reconfiguration and cell group activation for configuration for the UE. FIG. 7B is a schematic diagram of the implementation process of the fourth mobility management configuration method in the embodiment of the present disclosure. Referring to FIG. 7B, after S701 to S702, the above method may further include following steps.

S706, the network device determines that the UE has been configured with the conditional reconfiguration configuration or cell group activation configuration (i.e., the fifth configuration information).

S707, the network device does not configure the cell group activation configuration or conditional reconfiguration configuration (i.e., the sixth configuration information) for the UE.

It should be understood that, the network device configures one of the mobility management processes of conditional reconfiguration and cell group activation for the UE, and does not configure the other mobility management process.

For example, the network device determines that the UE has been configured with conditional reconfiguration, and the network device does not configure cell group activation for the UE. Alternatively, the network device determines that the UE has been configured with cell group activation, and the network device does not configure conditional reconfiguration for the UE.

In some possible implementations, the network device may also configure another mobility management process for the UE after the UE releases the existing configuration. FIG. 7C is a schematic diagram of the implementation process of the fifth mobility management configuration method in the embodiment of the present disclosure. Referring to FIG. 7C, the method further includes following steps.

S708, the network device determines that the UE has configured one of the conditional reconfiguration configuration and the cell group activation configuration.

S709, the network device instructs the UE to release the existing configuration (i.e., the fifth configuration information).

S710, the UE releases the existing configuration according to the instruction of the network device.

S711, the network device configures the other of the conditional reconfiguration configuration and the cell group activation configuration for the UE.

S712, the network device sends the other of the conditional reconfiguration configuration and the cell group activation configuration to the UE.

It should be understood that, the network device configures a mobility management process in conditional reconfiguration and cell group activation for the UE, and then the network device instructs the UE to release the conditional reconfiguration configuration or the cell group activation configuration, and the UE releases the conditional reconfiguration configuration or the cell group activation configuration. Next, the network device configures another mobility management process in conditional reconfiguration and cell group activation for the UE.

For example, the network device determines that the conditional reconfiguration has been configured for the UE, and then instructs the UE to release the conditional reconfiguration configuration. The UE releases the conditional reconfiguration configuration according to the instruction. After the UE releases the conditional reconfiguration configuration, the network device configures the cell group activation for the UE and sends the cell group activation configuration to the UE. Alternatively, the network device determines that the cell group activation has been configured for the UE, and then instructs the UE to release the cell group activation configuration. The UE releases the cell group activation configuration according to the instruction. After the UE releases the cell group activation configuration, the network device configures the conditional reconfiguration for the UE and sends the conditional reconfiguration configuration to the UE.

In some possible implementations, after S712, the UE may execute S703 to S704, or execute S705.

So far, the network device completes the configuration of the conditional reconfiguration or the cell group activation, and the UE completes the execution of the conditional reconfiguration or the cell group activation according to the configuration of the network device.

In the embodiment of the present disclosure, since the network device selects one of the conditional reconfiguration and the cell group activation for configuration for the UE, the conditional reconfiguration and the cell group activation are not configured at the same time, the UE releasing the conditional reconfiguration configuration will not affect the cell group activation, thereby improving the robustness of the system.

Based on the same inventive concept, the embodiment of the present disclosure also provides a mobility management configuration method, which can be applied to the terminal device (such as UE) side in the above communication system.

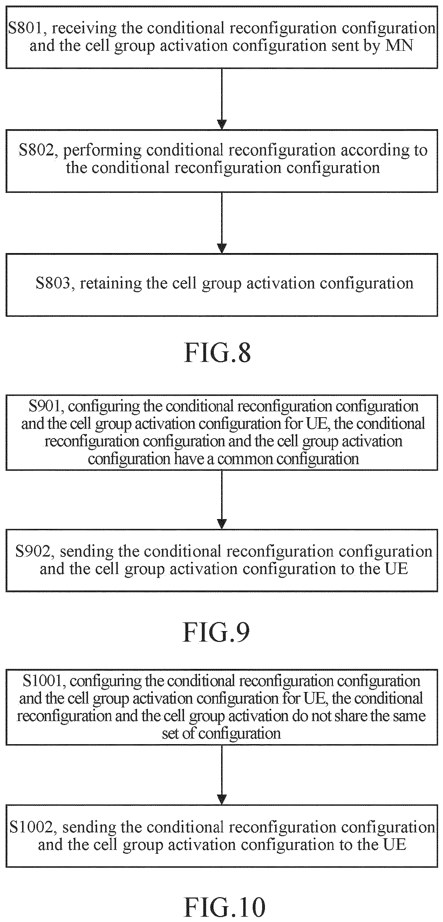

FIG. 8 is a schematic diagram of a specific implementation process of the first mobility management method on the UE side in the embodiment of the present disclosure. Referring to FIG. 8, the method may include following steps.

S801, the UE receives the conditional reconfiguration configuration (i.e., first configuration information) and the cell group activation configuration (i.e., second configuration information) sent by a network device (such as MN or SN).

The first configuration information and the second configuration information have common partial information.

It can be understood that, the UE may receive the conditional reconfiguration configuration and the cell group activation configuration configured by the network device.

In some possible implementations, the conditional reconfiguration configuration may include configuration information dedicated to conditional reconfiguration (also referred to as conditional reconfiguration dedicated configuration, recorded as configuration A), and the cell group activation configuration may include configuration information dedicated to cell group activation (also referred to as cell group activation dedicated configuration, recorded as configuration B). Further, the above configuration X may form a conditional reconfiguration configuration with configuration A, and the above configuration X may form a cell group activation configuration with configuration B.

In one embodiment, configuration A and configuration B may be contained in the same mobility management configuration. In this case, the mobility management configuration may include: configuration A, configuration B, and configuration X.

In another embodiment, configuration A and configuration B may be contained in different mobility management configurations, such as mobility management configuration 1 and mobility management configuration 2. In this case, mobility management configuration 1 may include: configuration A and configuration X, and mobility management configuration 2 may include: configuration B and indication information for indicating configuration X. Alternatively, configuration A and configuration B may be contained in different mobility management configurations, such as mobility management configuration 1 and mobility management configuration 2. In this case, mobility management configuration 1 may include: configuration A and indication information for indicating configuration X, and mobility management configuration 2 may include: configuration B and configuration X. Alternatively, configuration A and configuration B may be contained in different mobility management configurations, such as mobility management configuration 1 and mobility management configuration 2. In this case, mobility management configuration 1 may include: configuration A and indication information for indicating configuration X, and mobility management configuration 2 may include: configuration B and indication information for indicating configuration X.

In actual applications, the indication information for indicating configuration X may include one or more of the following: configuration ID of configuration A or configuration B carrying configuration X, common target cell ID, common target cell group ID, etc.

In one embodiment, the indication information for indicating configuration X may also be implicit indication information. For example, configuration X is indicated by configuration ID, that is, configuration X is carried in the configuration corresponding to the specific configuration ID. Configuration X may also be indicated in other ways, which are not specifically limited in the embodiment of the present disclosure.

S802, UE performs conditional reconfiguration according to the conditional reconfiguration configuration.

It should be understood that after receiving the conditional reconfiguration configuration, the UE starts to evaluate the trigger condition. When the UE evaluates that one or more conditions satisfy the trigger condition, the UE can directly trigger the corresponding execution process of the conditional reconfiguration. In the process of the UE executing the conditional reconfiguration, the corresponding conditional reconfiguration configuration is applied.

For example, it is assumed that the conditional reconfiguration is CHO. Then, the conditional reconfiguration configuration is carried with the configuration ID, the handover execution condition (i.e., the trigger condition), and the target cell configuration or target cell group configuration corresponding to each handover execution condition. After receiving the conditional reconfiguration configuration, the UE starts to evaluate the handover execution condition. When the UE evaluates that one or more handover execution conditions are satisfied, the UE can directly trigger the handover process and initiate random access to the target cell or target cell group according to the target cell configuration or target cell group configuration corresponding to the handover execution condition.

Alternatively, it is assumed that the conditional reconfiguration is CPAC. Then the conditional reconfiguration configuration is carried with the configuration ID, the execution condition (i.e., the trigger condition), and the target cell configuration or target cell group configuration corresponding to each execution condition. After receiving the conditional reconfiguration configuration, the UE starts to evaluate the execution condition. When the UE evaluates that one or more execution conditions are satisfied, the UE can initiate an access process and access the target cell or target cell group corresponding to the execution condition, and will no longer evaluate the target cell configuration or target cell group configuration corresponding to other execution conditions subsequently.

S803, the UE retains the cell group activation configuration.

It should be understood that since the network device has configured both conditional reconfiguration and cell group activation for the UE, then, in order to avoid affecting the cell group activation, the UE retains the cell group activation configuration after executing conditional reconfiguration through S802, for subsequent cell group activation. Here, the retained cell group activation configuration may include the above-mentioned common configuration, such as the common target cell configuration or the common target cell group configuration.

In one embodiment, since the conditional reconfiguration configuration and the cell group activation configuration include a common configuration, then, after S802, the UE retains the cell group activation configuration, which can be understood as retaining the cell group activation dedicated configuration and the common configuration. Then, the UE can release other information in the conditional reconfiguration configuration except for the above-mentioned common configuration, that is, the conditional reconfiguration dedicated configuration.

In another embodiment, after executing S801 and before executing S802, the UE can also duplicate the common configuration, so that there are two sets of common configurations for the conditional reconfiguration configuration and the cell group activation configuration. Then, the conditional reconfiguration dedicated configuration and one set of common configuration can constitute a complete conditional reconfiguration configuration, and the cell group activation dedicated configuration and another set of common configuration can constitute a complete cell group activation configuration. It can also be understood that the UE can add the duplicated common configuration to the cell group activation configuration. In this way, after executing S802, the UE can release the complete conditional reconfiguration configuration, to avoid affecting the cell group activation.

So far, the UE completes the execution of the conditional reconfiguration.

It should be noted that the implementation process of the above S801 to S803 can refer to the specific description of the UE side in the embodiment of FIG. 5. For the sake of brevity of the specification, it will not be repeated here.

In the embodiment of the present disclosure, when the conditional reconfiguration and the cell group activation share the same cell configuration, the UE retains the configuration information for the cell group activation after executing the conditional reconfiguration, and the information includes partial information commonly used for the conditional reconfiguration. In this way, configuration of the conditional reconfiguration is achieved, thereby avoiding the influence of deleting the configuration of the conditional reconfiguration on the cell group activation, and improving the system robustness.

Based on the same inventive concept, the embodiment of the present disclosure also provides a mobility management configuration method, which can be applied to the network device (such as MN or SN) side in the above communication system.

FIG. 9 is a schematic diagram of the specific implementation process of the first mobility management method on the network device side in the embodiment of the present disclosure. Referring to FIG. 9, the method may include following steps.

S901, the network device configures the conditional reconfiguration configuration (i.e., the first configuration information) and the cell group activation configuration (i.e., the second configuration information) for the terminal device (such as UE).

The first configuration information and the second configuration information have common partial information, that is, the conditional reconfiguration configuration and the cell group activation configuration have a common configuration.

S902, the network device sends the conditional reconfiguration configuration and the cell group activation configuration to the UE.

In some possible implementations, S902 may include: the network device sends mobility management configuration information to the UE; wherein the mobility management configuration information includes a conditional reconfiguration configuration and a cell group activation configuration, and the partial information is carried in the conditional reconfiguration configuration or the cell group activation configuration.

In some possible implementations, S902 may include: the network device sends first mobility management configuration information and second mobility management configuration information to the UE; wherein the first mobility management configuration information may include a conditional reconfiguration configuration, the second mobility management configuration information includes a cell group activation configuration, and the partial information is carried in the first mobility management configuration information or the second mobility management configuration information.

In some possible implementations, the conditional reconfiguration configuration or the cell group activation configuration includes indication information, and the indication information is used to indicate part of the information.

It should be noted that the implementation process of the above S901 to S902 can refer to the specific description of the network device side in the embodiment of FIG. 5, and for the sake of brevity of the specification, it will not be repeated here.

Based on the same inventive concept, the embodiment of the present disclosure also provides a mobility management configuration method, which can be applied to the network device (such as MN or SN) side of the above communication system.

FIG. 10 is a schematic diagram of a specific implementation process of the second mobility management method on the network device side in the embodiment of the present disclosure. Referring to FIG. 10, the method may include following steps.

S1001, the network device configures the conditional reconfiguration configuration (i.e., the third configuration information) and the cell group activation configuration (i.e., the fourth configuration information) for the terminal device (such as UE).

In one embodiment, the conditional reconfiguration configuration includes the first partial information, and the cell group activation configuration includes the second partial information. The first partial information is the same as the second partial information, that is, the conditional reconfiguration and the cell group activation have the same information, but do not share the same set of common configuration. The conditional reconfiguration configuration and the cell group activation configuration are configured for the terminal device, and the conditional reconfiguration configuration and the cell group activation configuration do not share the same set of common configuration.

In another embodiment, the first partial information and the second partial information may also be different. In this case, releasing the conditional reconfiguration configuration will not affect the cell group activation.

S1002, the network device sends the conditional reconfiguration configuration and the cell group activation configuration to the UE.

In some possible implementations, the first partial information and the second partial information may both include the above-mentioned common configuration, such as the configuration information of the target cell or the configuration information of the target cell group.

It should be noted that the implementation process of the above S1001 to S1002 can refer to the specific description of the network device side in the embodiment of FIG. 6. For the sake of brevity, it will not be repeated here.

In the embodiment of the present disclosure, since the conditional reconfiguration and the cell group activation do not share the same set of common configuration, the release of the conditional reconfiguration configuration by the UE will not affect the cell group activation, thereby improving the robustness of the system.

Based on the same inventive concept, the embodiment of the present disclosure also provides a mobility management configuration method, which can be applied to the terminal device (such as UE) side in the above communication system.

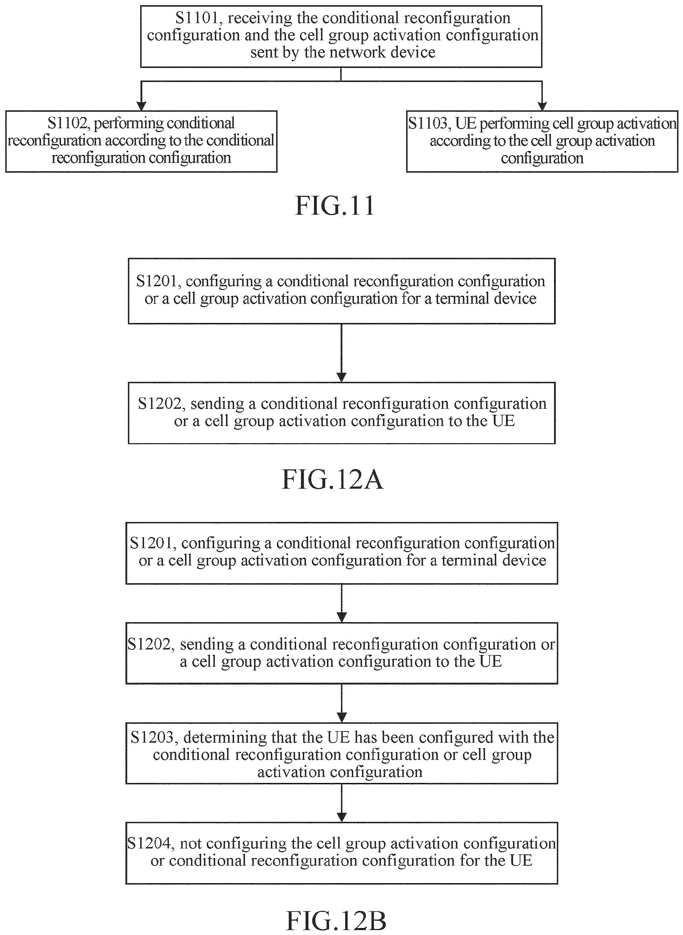

FIG. 11 is a schematic diagram of the specific implementation process of the second mobility management method on the UE side in the embodiment of the present disclosure. Referring to FIG. 11, the method may include following steps.

S1101, the UE receives the conditional reconfiguration configuration (i.e., the third configuration information) and the cell group activation configuration (i.e., the fourth configuration information) sent by the network device.

In one embodiment, the conditional reconfiguration configuration includes the first partial information, and the cell group activation configuration includes the second partial information. The first partial information is the same as the second partial information, that is, the conditional reconfiguration and the cell group activation have the same information, but do not share the same set of common configuration.

In another embodiment, the first partial information and the second partial information may also be different. In this case, releasing the conditional reconfiguration configuration will not affect the cell group activation.

S1102, UE performs conditional reconfiguration according to the conditional reconfiguration configuration.

S1103, UE performs cell group activation according to the cell group activation configuration.

In some possible implementations, the first partial information and the second partial information may both include the above-mentioned common configuration, such as the configuration information of the target cell or the configuration information of the target cell group.

It should be noted that the implementation process of the above S1101 to S1103 can refer to the specific description of the UE side in the embodiment of FIG. 6. For the sake of brevity of the specification, it is not repeated here.

In the embodiment of the present disclosure, since the conditional reconfiguration and the cell group activation do not share the same set of common configuration, the release of the conditional reconfiguration configuration by the UE will not affect the cell group activation, thereby improving the robustness of the system.

Based on the same inventive concept, the embodiment of the present disclosure also provides a mobility management configuration method, which can be applied to the network device (such as MN or SN) side in the above communication system.

FIG. 12A is a schematic diagram of a specific implementation process of the third mobility management method on the network device side in the embodiment of the present disclosure. Referring to FIG. 12A, the method may include following steps.

S1201, the network device configures a conditional reconfiguration configuration or a cell group activation configuration (i.e., the fifth configuration information) for a terminal device (such as UE).

S1202, the network device sends a conditional reconfiguration configuration or a cell group activation configuration to the UE.

It should be understood that the network device configures the conditional reconfiguration or the cell group activation for the UE through S1201, and correspondingly, the network device sends the conditional reconfiguration configuration or the cell group activation configuration to the UE. For example, if the network device configures the conditional reconfiguration for the UE through S1201, the network device sends the conditional reconfiguration configuration to the UE through S1202; or, if the network device configures the cell group activation for the UE through S1201, the network device sends the cell group activation configuration to the UE through S1202.

In some possible implementations, the network device can select one of the conditional reconfiguration and cell group activation for configuration for the UE. FIG. 12B is a schematic diagram of the implementation process of the fourth mobility management configuration method on the network device side in the embodiment of the present disclosure. Referring to FIG. 12B, after S1201 to S1202, the method further includes following steps.

S1203, the network device determines that the UE has been configured with the conditional reconfiguration configuration or cell group activation configuration (i.e., the fifth configuration information).

S1204, the network device does not configure the cell group activation configuration or conditional reconfiguration configuration (i.e., the sixth configuration information) for the UE.

It should be understood that, the network device configures one of the mobility management processes of conditional reconfiguration and cell group activation for the UE, and does not configure the other mobility management process.

For example, the network device determines that conditional reconfiguration has been configured for the UE, and the network device does not configure cell group activation for the UE. Alternatively, the network device determines that the cell group activation has been configured for the UE, and the network device does not configure conditional reconfiguration for the UE.

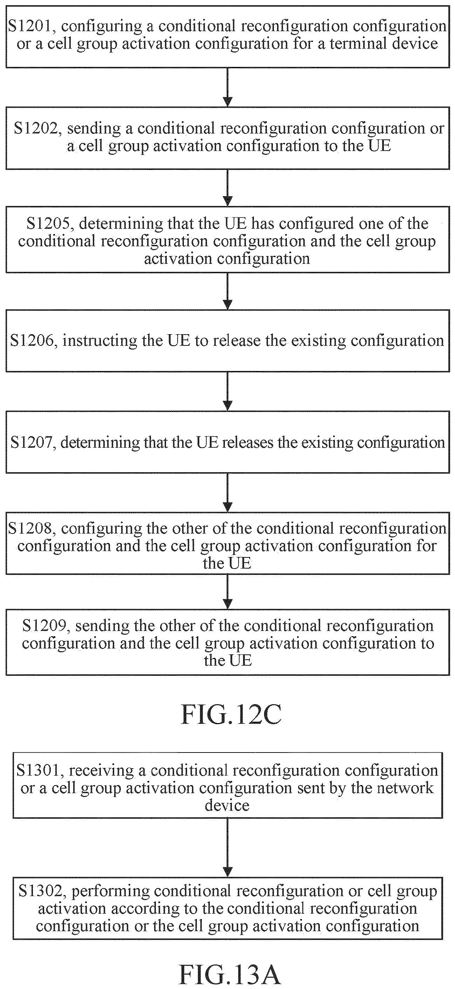

In some possible implementations, the network device may also configure another mobility management process for the UE after the UE releases the existing configuration. FIG. 12C is a schematic diagram of an implementation flow of a fifth mobility management configuration method on the network device side in an embodiment of the present disclosure. Referring to FIG. 12C, after S 1201 to S 1202, the method further includes following steps.

S1205, the network device determines that the UE has configured one of the conditional reconfiguration configuration and the cell group activation configuration.

S1206, the network device instructs the UE to release the existing configuration.

S1207, the network device determines that the UE releases the existing configuration.

S1208, the network device configures the other of the conditional reconfiguration configuration and the cell group activation configuration for the UE.

S1209, the network device sends the other of the conditional reconfiguration configuration and the cell group activation configuration to the UE.

It should be understood that, the network device configures a mobility management process in conditional reconfiguration and cell group activation for the UE, and then the network device instructs the UE to release the conditional reconfiguration configuration or the cell group activation configuration. After the UE releases the conditional reconfiguration configuration or the cell group activation configuration, the network device configures the other mobility management process in conditional reconfiguration and cell group activation for the UE.

For example, the network device determines that conditional reconfiguration has been configured for the UE, and then it instructs the UE to release the conditional reconfiguration configuration. After the UE releases the conditional reconfiguration configuration, the network device configures the cell group activation for the UE and sends the cell group activation configuration to the UE. Alternatively, the network device determines that the cell group activation has been configured for the UE, and then it instructs the UE to release the cell group activation configuration. After the UE releases the cell group activation configuration, the network device configures conditional reconfiguration for the UE and sends the conditional reconfiguration configuration to the UE.

So far, the network device completes the configuration of conditional reconfiguration or cell group activation.

It should be noted that the implementation process of the above S1201 to S1209 can refer to the specific description of the network device side in the embodiments of FIGS. 7A to 7C. For the sake of brevity, it is not repeated here.

In the embodiment of the present disclosure, since the network device selects one of the conditional reconfiguration and the cell group activation for configuration for the UE, the conditional reconfiguration and the cell group activation are not configured at the same time, the UE releasing the conditional reconfiguration configuration will not affect the cell group activation, thereby improving the robustness of the system.

Based on the same inventive concept, the embodiment of the present disclosure also provides a mobility management configuration method, which can be applied to the terminal device (such as UE) side in the above communication system.

FIG. 13A is a schematic diagram of a specific implementation process of the third mobility management method on the UE side in the embodiment of the present disclosure. Referring to FIG. 13A, the method may include following steps.

S1301, the UE receives a conditional reconfiguration configuration or a cell group activation configuration (i.e., the fifth configuration information) sent by the network device.

S1302, the UE performs conditional reconfiguration or cell group activation according to the conditional reconfiguration configuration or the cell group activation configuration.

It should be understood that the network device configures conditional reconfiguration or cell group activation for the UE, and correspondingly, the UE receives the conditional reconfiguration configuration or cell group activation configuration sent by the network device. For example, the network device configures conditional reconfiguration for the UE, and the UE receives the conditional reconfiguration configuration sent by the network device; or, the network device configures cell group activation for the UE, and the UE receives the cell group activation configuration sent by the network device.

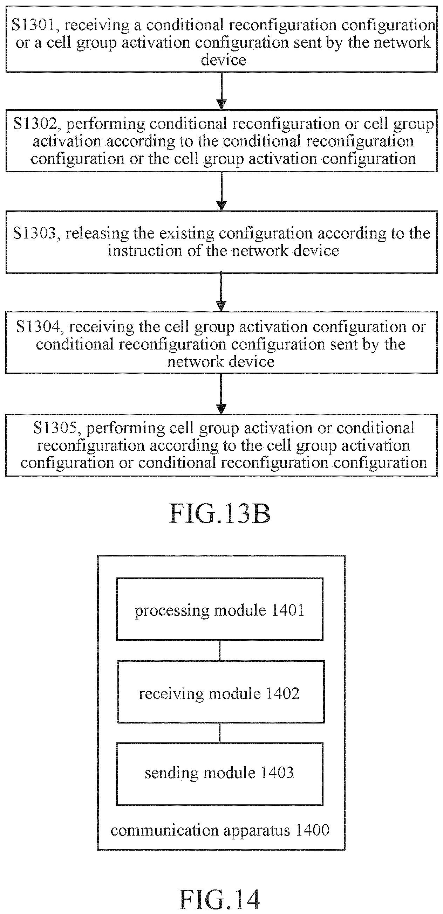

In some possible implementations, after the network device configures one of the conditional reconfiguration configuration and the cell group activation configuration for the UE, it may also configure another mobility management process for the UE after the UE releases the existing configuration. FIG. 13B is a schematic diagram of the implementation process of the fourth mobility management configuration method on the UE side in the embodiment of the present disclosure. Referring to FIG. 13B, after S1301 to S1302, the method further includes following steps.

S1303, the UE releases the existing configuration (i.e., the fifth configuration information) according to the instruction of the network device.

S1304, the UE receives the cell group activation configuration or conditional reconfiguration configuration (i.e., the sixth configuration information) sent by the network device.

S1305, the UE performs cell group activation or conditional reconfiguration according to the cell group activation configuration or conditional reconfiguration configuration.

It should be understood that, the network device configures a mobility management process in conditional reconfiguration and cell group activation for the UE, and then the network device instructs the UE to release the conditional reconfiguration configuration or the cell group activation configuration. The UE releases the conditional reconfiguration configuration or the cell group activation configuration according to the instruction of the network device. Next, the network device configures another mobility management process in conditional reconfiguration and cell group activation for the UE, and the UE performs the corresponding mobility management process according to the configuration of the network device.

For example, the network device determines that conditional reconfiguration has been configured for the UE, and then it instructs the UE to release the conditional reconfiguration configuration. After the UE releases the conditional reconfiguration configuration, the network device configures the cell group activation for the UE, and the UE executes the cell group activation configuration according to the cell group activation configuration. Alternatively, if the network device determines that the cell group activation has been configured for the UE, it instructs the UE to release the cell group activation configuration. After the UE releases the cell group activation configuration, the network device configures the conditional reconfiguration for the UE, and the UE executes the conditional reconfiguration according to the conditional reconfiguration configuration.

So far, the UE completes the execution of the conditional reconfiguration or the cell group activation according to the configuration of the network device.

It should be noted that the implementation process of the above S1201 to S1209 can refer to the specific description of the network device side in the embodiments of FIGS. 7A to 7C, and for the sake of brevity of the specification, it will not be repeated here.

In the embodiment of the present disclosure, since the network device selects one of the conditional reconfiguration and the cell group activation for configuration for the UE, the conditional reconfiguration and the cell group activation are not configured at the same time, the UE releasing the conditional reconfiguration configuration will not affect the cell group activation, thereby improving the robustness of the system.

Based on the same inventive concept, the embodiment of the present disclosure provides a mobility management configuration apparatus. FIG. 14 is a schematic diagram of the structure of a mobility management configuration apparatus in the embodiment of the present disclosure. As shown in FIG. 14, the mobility management configuration apparatus 1400 may include: a processing module 1401, a receiving module 1402, and a sending module 1403.

In some possible embodiments, the mobility management configuration apparatus 1400 may be a terminal device (such as the UE described in the above embodiment) in a communication system or a chip or system on chip in the terminal device, and may also be a functional module in the terminal device for implementing the methods of the above embodiments. The mobility management configuration apparatus may implement the functions performed by the terminal device in the above embodiments, and these functions may be implemented by hardware executing corresponding software. These hardware or software includes one or more modules corresponding to the above functions.

Correspondingly, the receiving module 1402 is configured to receive first configuration information for conditional reconfiguration and second configuration information for cell group activation sent by a network device, wherein the first configuration information and the second configuration information have common partial information; the processing module is configured to perform conditional reconfiguration according to the first configuration information; and retain the second configuration information.

In some possible implementations, the partial information at least includes configuration information of a target cell or configuration information of a target cell group.

In some possible implementations, the first configuration information and the second configuration information are contained in identical mobility management configuration information.

In some possible implementations, the first configuration information is contained in first mobility management configuration information, the second configuration information is contained in second mobility management configuration information, the partial information is carried in the first mobility management configuration information or the second mobility management configuration information; the first configuration information or the second configuration information includes indication information, and the indication information is used for indicating the partial information.

In some possible implementations, the processing module 1401 is further configured to release other information in the first configuration information except for the partial information.

In some possible implementations, the receiving module 1402 is configured to receive the third configuration information for conditional reconfiguration and the fourth configuration information for cell group activation sent by the network device; the processing module 1401 is configured to perform conditional reconfiguration according to the third configuration information; the terminal device performs cell group activation according to the fourth configuration information.

In some possible implementations, the third configuration information includes first partial information, the fourth configuration information includes second partial information, and the first partial information and the second partial information are identical.

In some possible implementations, the first partial information includes configuration information of a target cell or configuration information of a target cell group.

In some possible implementations, the receiving module 1402 is configured to receive the fifth configuration information sent by the network device, wherein the fifth configuration information is used for conditional reconfiguration or cell group activation; the processing module 1401 is configured to perform conditional reconfiguration or cell group activation by the terminal device according to the fifth configuration information.

In some possible implementations, the processing module 1401 is further configured to release the fifth configuration information according to the instruction of the network device; the receiving module 1402 is further configured to receive the sixth configuration information sent by the network device, wherein the sixth configuration information is used for cell group activation or conditional reconfiguration; the processing module 1401 is further configured to perform cell group activation or conditional reconfiguration according to the sixth configuration information.

In some possible implementations, the fifth configuration information is used for conditional reconfiguration, and the sixth configuration information is used for cell group activation; or, the fifth configuration information is used for cell group activation, and the sixth configuration information is used for conditional reconfiguration.

In some possible implementations, the mobility management configuration apparatus 1400 can be a network device in a communication system or a chip or system on chip in a network device, and can also be a functional module in a network device for implementing the methods of the above-mentioned embodiments. The mobility management configuration apparatus can implement the functions performed by the network device in the above embodiments, and these functions can be implemented by hardware executing corresponding software. These hardware or software includes one or more modules corresponding to the above functions.

Correspondingly, the processing module 1401 is configured to configure first configuration information for conditional reconfiguration and second configuration information for cell group activation for a terminal device, wherein the first configuration information and the second configuration information have common partial information; the sending module 1403 is configured to send the first configuration information and the second configuration information to the terminal device.

In some possible implementations, the sending module 1403 is configured to send mobility management configuration information to the terminal device; wherein the mobility management configuration information includes the first configuration information and the second configuration information.

In some possible implementations, the sending module 1403 is configured to send first mobility management configuration information and second mobility management configuration information to the terminal device; wherein the first mobility management configuration information includes the first configuration information, the second mobility management configuration information includes the second configuration information, and the partial information is carried in the first mobility management configuration information or the second mobility management configuration information.

In some possible implementations, the first configuration information or the second configuration information includes indication information, and the indication information is used for indicating the partial information.

In some possible implementations, the processing module 1401 is configured to configure third configuration information for conditional reconfiguration and fourth configuration information for cell group activation for a terminal device; the sending module1403 is configured to send the third configuration information and the fourth configuration information to the terminal device.

In some possible implementations, the third configuration information includes first partial information, the fourth configuration information includes second partial information, and the first partial information and the second partial information are identical.

In some possible implementations, the first partial information includes configuration information of a target cell or configuration information of a target cell group.

In some possible implementations, the processing module 1401 is configured to configure fifth configuration information for a terminal device, wherein the fifth configuration information is used for conditional reconfiguration or cell group activation; the sending module 1403 is configured to send the fifth configuration information to the terminal device.

In some possible implementations, the processing module 1401 is further configured to: determine that the fifth configuration information has been configured for the terminal device; and not configure sixth configuration information for the terminal device, wherein the sixth configuration information is used for the cell group activation or the conditional reconfiguration.

In some possible implementations, the processing module 1401 is further configured to: determine that the terminal device has been configured with the fifth configuration information; instruct the terminal device to release the fifth configuration information; configure sixth configuration information for the terminal device, wherein the sixth configuration information is used for the cell group activation or the conditional reconfiguration.

In some possible implementations, the fifth configuration information is used for the conditional reconfiguration and the sixth configuration information is used for the cell group activation; or, the fifth configuration information is used for the cell group activation and the sixth configuration information is used for the conditional reconfiguration.

It should be noted that the specific implementation process of the processing module 1401, the receiving module 1402 and the sending module 1402 can refer to the detailed description of the UE and the network device in the embodiments of FIGS. 5 to 7C. For the sake of brevity of the specification, it is not repeated here.

The receiving module 1402 mentioned in the embodiment of the present disclosure can be a receiving interface, a receiving circuit or a receiver, etc., and the sending module 1402 can be a sending interface, a sending circuit or a transmitter, etc.; the processing module 1401 can be one or more processors.

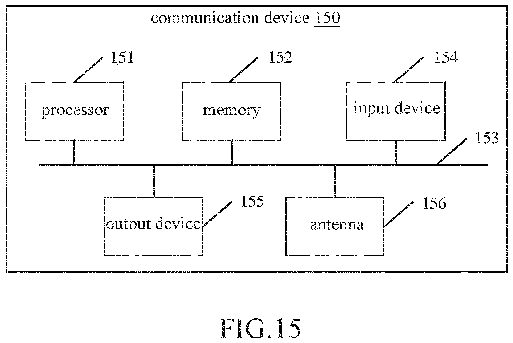

Based on the same inventive concept, an embodiment of the present disclosure provides a communication device, which may be UE or a network device described in one or more of the above embodiments. FIG.15 is a schematic diagram of the structure of a communication device in an embodiment of the present disclosure. As shown in FIG.15, a communication device 150 uses general computer hardware, including a processor 151, a memory 152, a bus 153, an input device 154, and an output device 155.

In some possible implementations, the memory 152 may include a computer storage medium in the form of a volatile and/or non-volatile memory, such as a read-only memory and/or a random access memory. The memory 152 may store an operating system, an application, other program modules, executable codes, program data, user data, etc.

The input device 154 may be used to input commands and information to the communication device, such as a keyboard or a pointing device, such as a mouse, a trackball, a touchpad, a microphone, a joystick, a game pad, a satellite TV antenna, a scanner, or a similar device. These input devices may be connected to the processor 151 via a bus 153.

The output device 155 can be used to output information to the communication device. In addition to the monitor, the output device 155 can also be other peripheral output devices, such as speakers and/or printing devices, which can also be connected to the processor 151 through the bus 153.

The communication device can be connected to the network through the antenna 156, for example, to a local area network (LAN). In a networked environment, the computer execution instructions stored in the control device can be stored in a remote storage device, not limited to local storage.

When the processor 151 in the communication device executes the executable code or application stored in the memory 152, the communication device executes the mobility management configuration method on the terminal device side or the network device side in the above embodiments. The specific execution process is referred to the above embodiments, which will not be repeated herein.

In addition, the above memory 152 stores computer execution instructions for implementing the functions of the processing module 1401, the receiving module 1402 and the sending module 1403 in FIG. 14. The functions/implementation processes of the processing module 1401, the receiving module 1402 and the sending module 1403 in FIG. 14 can be implemented by the processor 151 in FIG.15 calling the computer execution instructions stored in the memory 152. The specific implementation process and functions refer to the above related embodiments.

Based on the same inventive concept, the embodiment of the present disclosure provides a terminal device, which is consistent with the UE in one or more of the above embodiments. Optionally, the terminal device can be a mobile phone, a computer, a digital broadcast terminal device, a message transceiver device, a game console, a tablet device, a medical device, a fitness device, a personal digital assistant, etc.

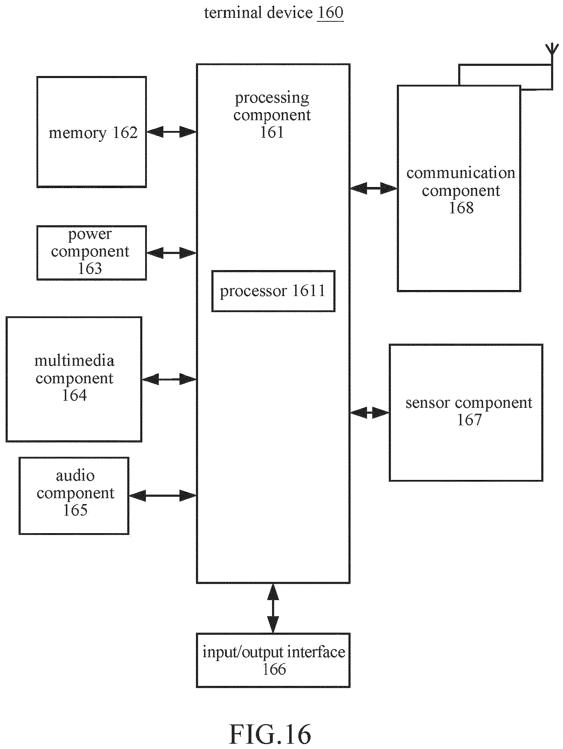

FIG. 16 is a structural schematic diagram of a terminal device in an embodiment of the present disclosure. Referring to FIG. 16, the terminal device 160 may include one or more of the following components: a processing component 161, a memory 162, a power component 163, a multimedia component 164, an audio component 165, an input/output (I/O) interface 166, a sensor component 167, and a communication component 168.

The processing component 161 typically controls the overall operations of the terminal device 160, such as the operations associated with display, telephone calls, data communications, camera operations, and recording operations. The processing component 161 can include one or more processors 1611 to execute instructions to perform all or part of the steps in the above methods. Moreover, the processing component 161 can include one or more modules to facilitate the interaction between the processing component 161 and other components. For example, the processing component 161 can include a multimedia module to facilitate the interaction between the multimedia component 164 and the processing component 161.

The memory 162 is configured to store various types of data to support the operation of the terminal device 160. Examples of such data include instructions for any application or method operated on the terminal device 160, such as the contact data, the phone book data, messages, pictures, videos, and the like. The memory 162 can be implemented by any type of volatile or non-volatile storage device, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 163 provides power to various components of the terminal device 160. The power component 163 can include a power management system, one or more power sources, and other components associated with the generation, management, and distribution of power in the terminal device 160.

The multimedia component 164 includes a screen providing an output interface between the terminal device 160 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 164 includes a front camera and/or a rear camera. When the terminal device 160 is in an operation mode, such as a photographing mode or a video mode, the front camera and/or the rear camera can receive external multimedia data. Each of the front camera and the rear camera may be a fixed optical lens system or have focus and optical zoom capability.

The audio component 165 is configured to output and/or input an audio signal. For example, the audio component 165 includes a microphone (MIC) configured to receive an external audio signal when the terminal device 160 is in an operation mode, such as a call mode, a recording mode, and a voice recognition mode. The microphone is configured to receive the external audio signal. The received audio signal may be further stored in the memory 162 or sent via the communication component 168. In some embodiments, the audio component 165 also includes a speaker for outputting the audio signal.

The I/O interface 166 provides an interface between the processing component 161 and peripheral interface modules, such as a keyboard, a click wheel, a button, and the like. These buttons may include, but not limited to, a home button, a volume button, a starting button, and a locking button.

The sensor component 167 includes one or more sensors for providing state assessments of various aspects of the terminal device 160. For example, the sensor component 167 can monitor an open/closed state of the terminal device 160, relative positioning of components, such as the display and the keypad of the terminal device 160. The sensor component 167 can also detect a change in position of one component of the terminal device 160 or the terminal device 160, the presence or absence of user contact with the terminal device 160, an orientation, or an acceleration/deceleration of the terminal device 160, and a change in temperature of the terminal device 160. The sensor component 167 can also include a proximity sensor configured to detect the presence of nearby objects without any physical contact. The sensor component 167 can also include a light sensor, such as a CMOS or CCD image sensor, configured to use in imaging applications. In some embodiments, the sensor component 167 can also include an accelerometer sensor, a gyroscope sensor, a magnetic sensor, a pressure sensor, or a temperature sensor.

The communication component 168 is configured to facilitate communication between the terminal device 160 and other devices by wired or wireless manners. The terminal device 160 can access a wireless network adopting a communication standard, such as Wi-Fi, 2G, 3G, 4G, 4G, 5G or a combination thereof. In an example embodiment, the communication component 168 receives broadcast signals or broadcast associated information from an external broadcast management system via a broadcast channel. In an example embodiment, the communication component 168 also includes a near field communication (NFC) module to facilitate short-range communication. For example, the NFC module can adopt radio frequency identification (RFID) technology, infrared data association (IrDA) technology, ultra-wideband (UWB) technology, Bluetooth (BT) technology and other technologies.

In an example embodiment, the terminal device 160 may be implemented with one or more application specific integrated circuits (ASICs), digital signal processors (DSPs), digital signal processing devices (DSPDs), programmable logic devices (PLDs), field programmable Gate arrays (FPGAs), controllers, microcontrollers, microprocessors or other electronic components, to perform the methods described above.

Based on the same inventive concept, an embodiment of the present disclosure provides a network device that is consistent with the base station in one or more of the above embodiments.

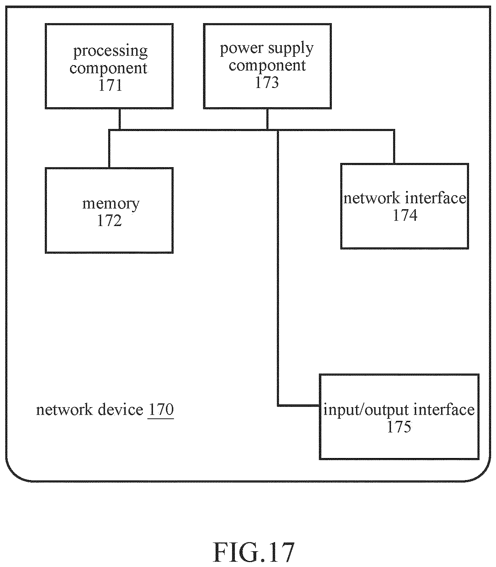

FIG. 17 is a schematic diagram of the structure of a network device in an embodiment of the present disclosure. As shown in FIG. 17, the network device 170 may include a processing component 171, which further includes one or more processors, and a memory resource represented by a memory 172 for storing instructions executable by the processing component 171, such as an application. The application stored in the memory 172 may include one or more modules each corresponding to a set of instructions. In addition, the processing component 171 is configured to execute instructions to execute any of the aforementioned methods applied to the network device.

The network device 170 may also include a power supply component 173 configured to perform power management of the network device 170, a wired or wireless network interface 174 configured to connect the network device 170 to a network, and an input/output (I/O) interface 175. The network device 170 may operate an operating system stored in the memory 172, such as Windows Server TM, Mac OS XTM, UnixTM, LinuxTM, FreeBSDTM or the like.

Based on the same inventive concept, a network device includes: an antenna; a memory; and a processor, which is connected to the antenna and the memory respectively, and is configured to control the transmission and reception of the antenna by executing computer executable instructions stored in the memory, and can implement the method on the network device side in one or more of the above embodiments.

Based on the same inventive concept, a terminal device includes: an antenna; a memory; and a processor, which is connected to the antenna and the memory respectively, and is configured to control the transmission and reception of the antenna by executing computer executable instructions stored in the memory, and can implement the method on the terminal device side in one or more of the above embodiments.

Based on the same inventive concept, the embodiment of the present disclosure also provides a computer-readable storage medium, in which instructions are stored; when the instructions are executed on a computer, the method on the terminal device side or the network device side in one or more of the above embodiments is executed.

Based on the same inventive concept, the embodiment of the present disclosure also provides a computer program or a computer program product, which, when executed on a computer, enables the computer to implement the method on the terminal device side or the network device side in one or more of the above embodiments.

In the embodiment of the present disclosure, the above mobility management configuration method may include but is not limited to the following possible implementations.

In the first possible implementation, after the UE performs certain conditional reconfiguration, the UE retains the configuration of the candidate target cell (cell group) for the selective activation of the cell group.
a) If the configuration of the candidate target cell (cell group) in some existing conditional reconfiguration configurations of the UE is also used for the selective activation of the cell group, delete the trigger condition configuration of this conditional reconfiguration configuration, and retain the configuration of the candidate target cell (cell group) for the selective activation of the cell group. (Or only delete the configuration information specific to the conditional reconfiguration, and retain the common cell group selective activation related configuration).
b) Otherwise, delete the configuration of this conditional reconfiguration, including: the trigger condition of the conditional reconfiguration and the configuration of the candidate target cell (cell group).

In the second possible implementation, in order to avoid the impact of deleting the configuration of the conditional reconfiguration on the selective activation of the cell group, when the conditional reconfiguration and the cell group selective activation configuration exist at the same time and share the same candidate cell (cell group) configuration, the UE can duplicate the cell group configuration and store it in the configuration information of the conditional reconfiguration and the cell group activation respectively.
a) When the conditional reconfiguration is triggered, the UE releases the configuration of the conditional reconfiguration and retains the configuration of the cell group selective activation.

In the third possible implementation, in order to avoid the impact of deleting the configuration of conditional reconfiguration on the selective activation of the cell group, the protocol stipulates that the conditional reconfiguration and cell group selective activation configuration sent by the NW to the UE cannot share the same set of candidate cell (cell group) configuration.
a) Configure independent candidate cell (cell group) configurations for cell group selective activation and conditional reconfiguration.

In the fourth possible implementation, the protocol stipulates that cell group selective activation and conditional reconfiguration cannot be configured at the same time.
a) If the UE has been configured with conditional reconfiguration, the network cannot configure cell group selective activation.
b) If the UE has been configured with cell group selective activation, the network cannot configure conditional reconfiguration.
c) If the UE has been configured with conditional reconfiguration, the network triggers the UE to release all conditional reconfiguration configurations first, and then configures cell group selective activation for the UE.
d) If the UE has been configured with cell group selective activation, the network triggers the UE to release all cell group selective activation configurations first, and then configures conditional reconfiguration for the UE.

In a fifth possible implementation, the UE may determine whether the configuration of the candidate target cell (cell group) is used for both conditional reconfiguration and cell group selective activation at the same time through the following method.
a) The configuration of conditional reconfiguration and the configuration of cell group selective activation are contained in the same mobility management configuration information.
b) The configuration of the candidate target cell (cell group) is indicated by indication information to be used for both conditional reconfiguration and cell group selective activation at the same time.
c) The configuration identifier of the candidate target cell (cell group) is contained in the corresponding conditional reconfiguration configuration and cell group selective activation configuration.
d) The candidate target cell (cell group) in conditional reconfiguration and cell group selective activation is the same target cell, i.e., corresponding to the ID of the same cell.

For example, the following is specific implementation.

### Embodiment 1:

Step 1, the UE receives one or more conditional reconfiguration configuration (A-C) information and cell group selective activation configuration (D-E) information sent by the network side, wherein the conditional reconfiguration configuration A and the cell group selective activation configuration D share the same mobility management configuration (configuration 1), which includes but is not limited to the configuration identifier, conditional reconfiguration trigger condition, and candidate target cell configuration (corresponding to the invention point 5-a).

Step 2, the UE evaluates the trigger condition corresponding to the conditional reconfiguration (A-C). When any corresponding trigger condition in A-C is met, the UE performs conditional reconfiguration and applies the configuration of the corresponding candidate target cell.

Step 3, for configurations B and C that are only used for conditional reconfiguration, the UE releases these configurations.

Step 4, for conditional reconfiguration configuration A that is shared with D, the UE only releases the trigger condition of conditional reconfiguration.

Step 5, optionally, if configuration 1 (i.e., configuration A) contains indication that it is used for conditional reconfiguration and/or cell group activation, this indication information also needs to be deleted.

Step 6, in this way, the UE can continue to retain the configuration of selective activation, for selective activation of the cell group.

Steps 2 to 5 correspond to the first possible implementation mentioned above.

### Embodiment 2:

Step 1, the UE receives one or more conditional reconfiguration configuration (A-C) information and cell group selective activation configuration (D-E) information sent by the network side, wherein the conditional reconfiguration configuration A and the cell group selective activation configuration D share the same mobility management configuration (configuration 1), which includes but is not limited to configuration identifier, conditional reconfiguration trigger condition, and candidate target cell configuration.

Step 2, when the UE receives these configurations, it stores B C E. For the configuration 1 shared by A D, the UE duplicates the common configuration, such as the candidate target cell configuration, and then stores A and D separately, wherein A includes the configuration identifier, conditional reconfiguration trigger condition, and candidate target cell configuration. D includes the configuration identifier, candidate target cell configuration, and the specific configuration of cell group selective activation contained in the other configuration 1.

Step 3, the UE evaluates the trigger conditions corresponding to the conditional reconfiguration (A-C). When any corresponding trigger condition in A-C is met, the UE performs conditional reconfiguration and applies the corresponding candidate target cell configuration.

Step 4, the UE releases the configuration ABC of the conditional reconfiguration and retains the cell group selective activation configuration DE.

Step 5, in this way, the UE can continue to retain the configuration of selective activation, for the selective activation of the cell group.

Steps 2 to 4 correspond to the above second possible implementation.

### Embodiment 3:

Step 1, the UE receives one or more conditional reconfiguration configuration (A-C) information and cell group selective activation configuration (D-E) information sent by the network side. The configurations of A B C include but are not limited to configuration identifiers, conditional reconfiguration trigger conditions, and candidate target cell configurations, for conditional reconfiguration. The configurations of DE include but are not limited to configuration identifiers and candidate target cell configurations, for cell group selective activation (the invention point 3).

The subsequent steps are the same as steps 3 to 5 of Embodiment 2.

Other embodiments of the present disclosure will be apparent to those skilled in the art from consideration of the specification and practice of the present disclosure disclosed herein. The present disclosure is intended to cover any variations, uses, or adaptations of the present disclosure, which are in accordance with the general principles of the present disclosure and include common general knowledge or conventional technical means in the art that are not disclosed in the present disclosure. The specification and embodiments are illustrative only, and the real scope and spirit of the present disclosure is defined by the appended claims.

It should be understood that, the present disclosure is not limited to the precise structures that have been described above and shown in the drawings, and various modifications and changes can be made without departing from the scope thereof. The scope of the present disclosure is limited only by the appended claims.

## Claims

1. A mobility management configuration method, comprising:
receiving, by a terminal device, first configuration information for conditional reconfiguration and second configuration information for cell group activation sent by a network device, wherein the first configuration information and the second configuration information have common partial information;
performing, by the terminal device, conditional reconfiguration according to the first configuration information; and
retaining, by the terminal device, the second configuration information.

2. The method according to claim 1, wherein the partial information at least comprises configuration information of a target cell or configuration information of a target cell group.

3. The method according to claim 1, wherein the first configuration information and the second configuration information are contained in identical mobility management configuration information.

4. The method according to claim 1, wherein the first configuration information is contained in first mobility management configuration information, the second configuration information is contained in second mobility management configuration information, the first mobility management configuration information and the second mobility management configuration information are different mobility management configuration information, the partial information is carried in the first mobility management configuration information or the second mobility management configuration information; the first configuration information or the second configuration information comprises indication information, and the indication information is used for indicating the partial information.

5. The method according to claim 1, further comprising:
releasing, by the terminal device, other information in the first configuration information except for the partial information.

6. A mobility management configuration method, comprising:
configuring, by a network device, first configuration information for conditional reconfiguration and second configuration information for cell group activation for a terminal device, wherein the first configuration information and the second configuration information have common partial information; and
sending, by the network device, the first configuration information and the second configuration information to the terminal device.

7. The method according to claim 6, wherein sending, by the network device, the first configuration information and the second configuration information to the terminal device comprises:
sending, by the network device, mobility management configuration information to the terminal device;
wherein the mobility management configuration information comprises the first configuration information and the second configuration information.

8. The method according to claim 6, wherein sending, by the network device, the first configuration information and the second configuration information to the terminal device comprises:
sending, by the network device, first mobility management configuration information and second mobility management configuration information to the terminal device;
wherein the first mobility management configuration information and the second mobility management configuration information are different mobility management configuration information, the first mobility management configuration information comprises the first configuration information, the second mobility management configuration information comprises the second configuration information, and the partial information is carried in the first mobility management configuration information or the second mobility management configuration information.

9. The method according to claim 6, wherein the first configuration information or the second configuration information comprises indication information, and the indication information is used for indicating the partial information.

10. A mobility management configuration method, comprising:
configuring, by a network device, third configuration information for conditional reconfiguration and fourth configuration information for cell group activation for a terminal device; and
sending, by the network device, the third configuration information and the fourth configuration information to the terminal device.

11. The method according to claim 10, wherein the third configuration information comprises first partial information, the fourth configuration information comprises second partial information, and the first partial information and the second partial information are identical.

12. The method according to claim 11, wherein the first partial information comprises configuration information of a target cell or configuration information of a target cell group.

13. A mobility management configuration method, comprising:
configuring, by a network device, fifth configuration information for a terminal device, wherein the fifth configuration information is used for conditional reconfiguration or cell group activation; and
sending, by the network device, the fifth configuration information to the terminal device.

14. The method according to claim 13, further comprising:
determining, by the network device, that the fifth configuration information has been configured for the terminal device;
not configuring, by the network device, sixth configuration information for the terminal device, wherein the sixth configuration information is used for the cell group activation or the conditional reconfiguration.

15. The method according to claim 13, further comprising:
determining, by the network device, that the terminal device has been configured with the fifth configuration information;
instructing, by the network device, the terminal device to release the fifth configuration information;
configuring, by the network device, sixth configuration information for the terminal device, wherein the sixth configuration information is used for the cell group activation or the conditional reconfiguration.

16. The method according to claim 14 or 15, wherein the fifth configuration information is used for the conditional reconfiguration and the sixth configuration information is used for the cell group activation; or, the fifth configuration information is used for the cell group activation and the sixth configuration information is used for the conditional reconfiguration.

17. A mobility management configuration apparatus, comprising:
a receiving module, configured to receive first configuration information for conditional reconfiguration and second configuration information for cell group activation sent by a network device, wherein the first configuration information and the second configuration information have common partial information; and
a processing module, configured to perform conditional reconfiguration according to the first configuration information; and retain the second configuration information.

18. The apparatus according to claim 17, wherein the partial information at least comprises configuration information of a target cell or configuration information of a target cell group.

19. The apparatus according to claim 17, wherein the first configuration information and the second configuration information are contained in identical mobility management configuration information.

20. The apparatus according to claim 17, wherein the first configuration information is contained in first mobility management configuration information, the second configuration information is contained in second mobility management configuration information, the first mobility management configuration information and the second mobility management configuration information are different mobility management configuration information, the partial information is carried in the first mobility management configuration information or the second mobility management configuration information; the first configuration information or the second configuration information comprises indication information, and the indication information is used for indicating the partial information.

21. The apparatus according to claim 17, wherein the processing module is further configured to release other information in the first configuration information except for the partial information.

22. A mobility management configuration apparatus, comprising:
a processing module, configured to configure first configuration information for conditional reconfiguration and second configuration information for cell group activation for a terminal device, wherein the first configuration information and the second configuration information have common partial information; and
a sending module, configured to send the first configuration information and the second configuration information to the terminal device.

23. The apparatus according to claim 22, wherein the sending module is configured to send mobility management configuration information to the terminal device; wherein the mobility management configuration information comprises the first configuration information and the second configuration information.

24. The apparatus according to claim 22, wherein the sending module is configured to send first mobility management configuration information and second mobility management configuration information to the terminal device; wherein the first mobility management configuration information and the second mobility management configuration information are different mobility management configuration information, the first mobility management configuration information comprises the first configuration information, the second mobility management configuration information comprises the second configuration information, and the partial information is carried in the first mobility management configuration information or the second mobility management configuration information.

25. The apparatus according to claim 24, wherein the first configuration information or the second configuration information comprises indication information, and the indication information is used for indicating the partial information.

26. A mobility management configuration apparatus, comprising:
a processing module, configured to configure third configuration information for conditional reconfiguration and fourth configuration information for cell group activation for a terminal device; and
a sending module, configured to send the third configuration information and the fourth configuration information to the terminal device.

27. The apparatus according to claim 26, wherein the third configuration information comprises first partial information, the fourth configuration information comprises second partial information, and the first partial information and the second partial information are identical.

28. The apparatus according to claim 27, wherein the first partial information comprises configuration information of a target cell or configuration information of a target cell group.

29. A mobility management configuration apparatus, comprising:
a processing module, configured to configure fifth configuration information for a terminal device, wherein the fifth configuration information is used for conditional reconfiguration or cell group activation; and
a sending module, configured to send the fifth configuration information to the terminal device.

30. The apparatus according to claim 29, wherein the processing module is further configured to: determine that the fifth configuration information has been configured for the terminal device; and not configure sixth configuration information for the terminal device, wherein the sixth configuration information is used for the cell group activation or the conditional reconfiguration.

31. The apparatus according to claim 29, wherein the processing module is further configured to: determine that the terminal device has been configured with the fifth configuration information; instruct the terminal device to release the fifth configuration information; configure sixth configuration information for the terminal device, wherein the sixth configuration information is used for the cell group activation or the conditional reconfiguration.

32. The apparatus according to claim 29 or 30, wherein the fifth configuration information is used for the conditional reconfiguration and the sixth configuration information is used for the cell group activation; or, the fifth configuration information is used for the cell group activation and the sixth configuration information is used for the conditional reconfiguration.

33. A communication device, comprising: an antenna; a memory; and a processor, connected to the antenna and the memory respectively, configured to control transmission and reception of the antenna by executing computer executable instructions stored on the memory, and capable of implementing the method according to any one of claims 1 to 16.

34. A computer storage medium, wherein instructions are stored on the computer-readable storage medium, the instructions are configured to execute the method according to any one of claims 1 to 16 when executed on a computer.
